(19) Europäisches Patentamt
European Patent Office
Office européen des brevets

(11) **EP 4 708 047 A1**

(12) **EUROPEAN PATENT APPLICATION**
published in accordance with Art. 153(4) EPC

(43) Date of publication:
**11.03.2026   Bulletin 2026/11**

(21) Application number: **24806084.0**

(22) Date of filing: **22.01.2024**

(51) International Patent Classification (IPC):
***G06F 9/50*** *(2006.01)*

(52) Cooperative Patent Classification (CPC):
**G06F 8/60; G06F 9/50**

(86) International application number:
**PCT/CN2024/073486**

(87) International publication number:
**WO 2024/234720 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.05.2023   CN 202310569681**

(71) Applicant: **Shenzhen Yinwang Intelligent
Technologies Co., Ltd.
Shenzhen, Guangdong 518110 (CN)**

(72) Inventor: **DING, Tao
Shenzhen, Guangdong 518129 (CN)**

(74) Representative: **Maiwald GmbH
Elisenhof
Elisenstraße 3
80335 München (DE)**

(54) **RESOURCE ALLOCATION METHOD, APPARATUS AND SYSTEM, AND VEHICLE**

(57)    This application discloses a resource allocation method, an apparatus, a system, and a transportation means, and relates to the field of processor technologies. In this application, a topology relationship between a plurality of service applications for which a plurality of processors in a controller are responsible, a communication protocol that the plurality of service applications comply with, and a deployment strategy are determined through deployment simulation. Then, a resource allocation status and a neural network configuration status of the plurality of processors in the controller are determined through running simulation. Then, a resource configuration strategy and/or a neural network configuration of the controller are/is adjusted through deployment optimization, to obtain a better resource allocation solution. Finally, resources of the plurality of processors in the controller are allocated based on a deployment optimization result to the plurality of service applications corresponding to the plurality of processors. Based on this, resource allocation can be automatically implemented from an overall perspective of the controller, to improve efficiency, properness, and scientificity of resource allocation or adjustment, and ensure a low communication latency and low power consumption in a process in which a domain controller performs a corresponding service.

FIG. 5

## Description

This application claims priority to Chinese Patent Application No. 202310569681.2, filed with the China National Intellectual Property Administration on May 18, 2023 and entitled "RESOURCE ALLOCATION METHOD, APPARATUS, SYSTEM, AND TRANSPORTATION MEANS", which is incorporated herein by reference in its entirety.

## TECHNICAL FIELD

This application relates to the field of processor technologies, and in particular, to a resource allocation method, an apparatus, a system, and a transportation means.

## BACKGROUND

With continuous development of in-vehicle technologies such as intelligent driving, a data transmission throughput of related functions such as intelligent driving, cockpit, and chassis control is increasingly large, a processing requirement is increasingly high, and a latency requirement is also increasingly high. In this case, a processing capability of a vehicle domain controller (domain control unit, DCU) including a single processor, for example, including a single system on chip (system on chip, SoC), cannot meet a requirement of the related function gradually. To resolve the foregoing problem, a plurality of processors are usually disposed in a domain controller, and the related function is ensured to be efficiently and reliably implemented by using advantages of the plurality of processors (for example, a plurality of SoCs) such as strong computing power, composability, flexibility and scalability, and convenience in redundancy backup.

The domain controller including a plurality of processors involves allocation of resources (such as computing power, memory, and bandwidth) between the plurality of processors and communication between the plurality of processors. Therefore, compared with a domain controller including a single processor, the domain controller including a plurality of processors has greater challenges in resource allocation and interaction between the processors. However, for the domain controller including a plurality of processors, a conventional resource allocation manner is still manual allocation or adjustment, resulting in a great loss of human and material resources. In addition, resources that are manually allocated or adjusted cannot be allocated from an overall perspective of the plurality of processors, and consequently, the resources are wasted to a specific extent, and usually cannot be properly adapted to services of the plurality of processors.

## SUMMARY

This application provides a resource allocation method, an apparatus, a system, and a transportation means, so that adaptive optimization of resource deployment can be performed from an overall perspective of a plurality of processors and a plurality of corresponding service applications, to ensure properness and scientificity of allocating resources of the plurality of processors to the plurality of service applications.

To achieve the foregoing objective, this application uses the following technical solutions.

According to a first aspect, a resource allocation method is provided. The method is applied to a first apparatus, and the method includes:

First, the first apparatus obtains a first resource allocation result and a first neural network configuration of a controller, where the controller includes a plurality of processors, the plurality of processors are configured to run a plurality of service applications, the first resource allocation result includes one or more of the following: load of a processing unit in each of the plurality of processors, memory load of each of the plurality of processors, a processing unit corresponding to each of the plurality of service applications, a quality of service (quality of service, QoS) level corresponding to each of the plurality of service applications, and a running latency corresponding to each of the plurality of service applications, and the first neural network configuration includes one or more of the following: a neural network type, a processing unit deployed in a neural network, and an acceleration operator. This step is mainly used to determine a current deployment status of the plurality of processors in the controller.

Then, when the first resource allocation result does not meet a preset condition, the first apparatus simulates running, based on the obtained acceleration operator in N different scenarios, running files (for example, application code) corresponding to the plurality of service applications, to obtain N corresponding acceleration results, where each acceleration result represents duration and a resource required for running the acceleration operator in a corresponding scenario. This step is mainly used to simulate service running in a plurality of different scenarios, to obtain a corresponding acceleration result, so as to obtain an optimal scenario. The plurality of different scenarios may be customized/automatically determined by the first apparatus, or may be customized by a user, for example, the user can customize an interface to be accelerated, an acceleration operator used by the interface, an acceleration strategy of the interface to be accelerated, a processing unit, duration required for running the acceleration operator, and a resource required for running the acceleration operator.

Then, the first apparatus adjusts, based on the obtained N acceleration results, a first resource configuration strategy and/or the first neural network configuration of the controller to obtain an adjustment result, where the adjustment result includes a second resource configuration strategy and/or a second neural network configuration. This step is mainly used to optimize a resource configuration strategy and/or a neural network configuration based on a configuration corresponding to an optimal scenario, to provide a basis for subsequent allocation of processor resources.

Finally, the first apparatus allocates, based on the obtained adjustment result, resources of the plurality of processors to the plurality of service applications. For example, the resources of the plurality of processors include one or more of the following: a computing resource, a memory resource, and a bandwidth resource. The computing resource is, for example, a central processing unit (central processing unit, CPU) resource, an AI computing core (AI core, AIC) resource, or an AI vector core (AI vector core, AIV) resource.

For example, the first apparatus may be a controller, or may be a resource allocation simulation device.

For example, the controller may be a domain controller, for example, a domain controller on a transportation means. The domain controller may include but is not limited to any one or more of the following: an intelligent driving domain controller, a cockpit domain controller, a chassis domain controller, a power domain controller, and a vehicle body domain controller. For example, the controller is a domain controller. A plurality of processors in the domain controller may be a plurality of systems on chip (systems on chip, SoC).

According to the solution provided in the first aspect, the first apparatus may simulate service running in a plurality of different scenarios, to obtain corresponding acceleration results, so as to further obtain an optimal scenario, may optimize a resource configuration strategy and/or a neural network configuration of the controller based on a configuration corresponding to the optimal scenario, and may finally adjust a current resource deployment status of the controller based on a deployment optimization result. For example, a solution of allocating the resources of the plurality of processors in the controller to the plurality of service applications is adjusted based on a deployment optimization result. Based on this, resource allocation can be automatically implemented from an overall perspective of the controller, to improve efficiency, properness, and scientificity of resource allocation or adjustment, and ensure a low communication latency and low power consumption in a process in which the domain controller performs a corresponding service.

In a possible implementation, before the first apparatus obtains the first resource allocation result and the first neural network configuration of the controller, the method further includes: The first apparatus obtains the first resource configuration strategy, where the first resource configuration strategy includes a topology relationship between the plurality of service applications and application information of each of the plurality of service applications, the application information includes a communication protocol and a deployment strategy of a corresponding service application, the deployment strategy indicates one or more of a node on which the service application is run in the controller, a scheduling strategy, a priority strategy, and a life cycle strategy, and the node is a processor in the plurality of processors or a processing unit in a processor. Based on this, that the first apparatus obtains the first resource allocation result and the first neural network configuration of the controller includes: The first apparatus simulates running the running files of the plurality of service applications based on the first resource configuration strategy, and obtains the first resource allocation result and the first neural network configuration of the controller when the plurality of service applications are run. Based on this, the first apparatus may determine, through deployment simulation, a topology relationship between the plurality of service applications for which the plurality of processors in the controller are responsible, a communication protocol that the plurality of service applications comply with, and a deployment strategy, to learn of a current resource deployment status of the controller, and provide a reference for subsequent deployment optimization.

In a possible implementation, that the first apparatus obtains the first resource configuration strategy includes: The first apparatus obtains the first resource configuration strategy when a service application corresponding to the controller changes. For example, the service application corresponding to the controller changes, for example, in an over the air (over the air, OTA) software upgrade scenario. Based on this, when software of the service application corresponding to the controller has an upgrade requirement or software of the controller has an upgrade requirement, resource adjustment and allocation can be automatically implemented from an overall perspective of the controller, thereby improving efficiency, properness, and scientificity of resource adjustment, and ensuring a low communication latency and low power consumption in a process in which the domain controller performs a corresponding service.

Certainly, the first apparatus may alternatively obtain the first resource configuration strategy in another case. For example, when the controller is powered on or the preset condition is met, a trigger condition and an occasion for the first apparatus to perform the resource allocation method are not specifically limited in this application.

In a possible implementation, that the first apparatus adjusts, based on the N acceleration results, the first resource configuration strategy and/or the first neural network configuration of the controller includes: The first apparatus adjusts, based on the N acceleration results, the first resource configuration strategy and/or the first neural network configuration of the controller by using a preset optimization method, where the preset optimization method includes one or more of the following: an optimization method based on historical experience and an optimization method based on an adaptive recommendation algorithm. Optimization based on the adaptive recommendation algorithm can reliably obtain an optimal solution in a plurality of acceleration results, to support subsequent deployment optimization based on a configuration corresponding to the optimal solution, so that a more scientific and proper adjustment result can be obtained. Optimization based on historical experience may be deployed and optimized based on a specific situation, for example, a function of the processing unit, a function of the controller, and an application scenario, to obtain an adjustment result that is suitable for an actual device and usage. Optimization based on historical experience and optimization based on the adaptive recommendation algorithm can not only improve reliability of the adjustment result from the perspective of the algorithm, but also compensate for the actual device and usage such as the processing unit function, controller function, and application scenario that are not considered by the adaptive recommendation algorithm.

In a possible implementation, that the first apparatus simulates running, based on the acceleration operator in the N different scenarios, the running files corresponding to the plurality of service applications, to obtain the N corresponding acceleration results includes: The first apparatus obtains intermediate data generated when running, based on the acceleration operator in each of the N different scenarios, the running files corresponding to the plurality of service applications; and the first apparatus generates, based on the intermediate data, the N acceleration results corresponding to the N different scenarios. For example, the acceleration result represents duration and a resource required for running the acceleration operator in a corresponding scenario. Based on this, an acceleration result such as duration and a resource required for running the acceleration operator in a corresponding scenario is obtained based on intermediate data at a key running node, so that reference information for subsequent deployment optimization is available, and reference and reliability of the reference information are ensured.

For example, a manner in which the first apparatus obtains the intermediate data may include but is not limited to instrumentation and/or intermediate data obtaining model setup.

In a possible implementation, that the first apparatus obtains the first resource configuration strategy includes: The first apparatus displays a first interface, where the first interface includes a first input channel; and the first apparatus receives the first resource configuration strategy that is entered by a user through the first input channel. Based on this, a user-friendly interface may be provided for the user to enter related data, thereby improving operation convenience of this solution.

For example, the first interface may be an existing tool development interface or tool optimization interface, for example, an AUTOSAR platform interface, an autonomous driving service framework initiative (autonomous driving service framework initiative, ADSFI) platform interface, or an MDC configuration (MDC manifest configuration, MMC) interface. Certainly, the first interface may alternatively be another interface that has a resource configuration strategy input channel.

Certainly, the solution provided in this application may also support the first apparatus in directly obtaining a current resource configuration strategy of the controller, to evaluate a current resource deployment status of the controller and perform further deployment optimization.

In a possible implementation, after the adjustment result is obtained, the adjustment result is further displayed on the first interface. Based on this, it is convenient for the user to intuitively understand a current resource configuration status, and it is convenient for the user to perform subsequent related operations, such as optimization, resource allocation, and solution export.

According to a second aspect, a controller is provided. The controller includes a plurality of processors. The plurality of processors are configured to support the controller in implementing functions corresponding to a plurality of service applications. The controller is configured to implement the method according to any one of the possible implementations of the first aspect.

According to a third aspect, a resource allocation simulation device is provided. The resource allocation simulation device includes: a communication interface, configured to perform communication between devices; a memory, configured to store computer program instructions; and a processor, configured to execute the computer program instructions, to support the resource allocation simulation device in implementing the method according to any possible implementation of the first aspect.

According to a fourth aspect, an electronic device is provided. The electronic device includes a controller. The controller includes a plurality of processors. The plurality of processors are configured to support the controller in implementing functions corresponding to a plurality of service applications. The controller is configured to implement the method according to any one of the possible implementations of the first aspect. For example, the electronic device may be a terminal device like a smartphone, a netbook, or a tablet computer, or an embedded device like a switch, an industrial computer, or an uncrewed aerial vehicle. This is not specifically limited in this application.

According to a fifth aspect, a control system is provided. The control system includes the controller according to the second aspect.

According to a sixth aspect, a transportation means is provided. The transportation means includes the controller according to the second aspect, the resource allocation device according to the third aspect, the electronic device according to the fourth aspect, or the control system according to the fifth aspect. The transportation means is configured to implement the method according to any possible implementation of the first aspect. For example, the transportation means may include but is not limited to a vehicle.

According to a seventh aspect, a computer-readable storage medium is provided. The computer-readable storage medium stores computer program instructions. When the computer program instructions are executed by a processor, the method according to any one of the possible implementations of the first aspect is implemented.

According to an eighth aspect, a computer program product including instructions is provided. When the computer program product runs on a computer, the computer is enabled to implement the method according to any one of the possible implementations of the first aspect.

According to a ninth aspect, a chip system is provided. The chip system includes a processing circuit and a storage medium. The storage medium stores computer program instructions. When the computer program instructions are executed by a processor, the method according to any one of the possible implementations of the first aspect is implemented. The chip system may include a chip, or may include a chip and another discrete component.

## BRIEF DESCRIPTION OF DRAWINGS

FIG. 1 is an example diagram of deployment of a domain controller on a vehicle according to an embodiment of this application;

FIG. 2 is a diagram of an architecture of a domain controller according to an embodiment of this application;

FIG. 3 is a diagram of an Ethernet protocol architecture according to an embodiment of this application;

FIG. 4 is a diagram of a structure of a controller according to an embodiment of this application;

FIG. 5 is a diagram of a resource allocation architecture according to an embodiment of this application;

FIG. 6 is a diagram of a topology relationship between a plurality of service applications according to an embodiment of this application;

FIG. 7 is a diagram of a user experience (user experience, UX) interface according to an embodiment of this application;

FIG. 8 is a diagram of several deployment optimization methods according to an embodiment of this application; and

FIG. 9 is a flowchart of a resource allocation method according to an embodiment of this application.

## DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The following terms "first", "second", and the like are merely used to distinguish between different described objects, and do not limit a position, a sequence, a priority, a quantity, content, or the like of the described objects. For example, if the described objects are "fields", ordinal numbers before "field" in a "first field" and a "second field" do not limit positions or a sequence of the "fields", and "first" and "second" do not limit whether "field" modified by "first" and "field" modified by "second" are in a same message, and do not limit a sequence of the "first field" and the "second field". For another example, if the described objects are "levels", ordinal numbers before "level" in a "first level" and a "second level" do not limit priorities of the "levels". For another example, a quantity of described objects is not limited by an ordinal number, and may be one or more. A "first device" is used as an example, where a quantity of "devices" may be one or more. In addition, objects modified by different prefix words may be the same or different. For example, if a described object is a "device", a "first device" and a "second device" may be devices of a same type, or devices of different types. For another example, if a described object is "information", "first information" and "second information" may be information of same content or information of different content. In conclusion, in embodiments of this application, use of the prefix words, for example, ordinal numbers, used to distinguish between the described objects constitutes no limitation on the described objects. For descriptions of the described objects, refer to context descriptions in claims or embodiments. Use of the prefix words should not constitute a redundant limitation.

In addition, in embodiments of this application, "connection" may be a direct connection or an indirect connection. In addition, "connection" may be an electrical connection or a communication connection. For example, that two electrical elements A and B are connected may mean that A and B are directly connected, or may mean that A and B are indirectly connected through another electrical element or a connection medium, or may mean that A and B are indirectly connected through another communication device or a communication medium, provided that A and B can communicate with each other.

For ease of understanding, the following first explains and describes related technical terms in embodiments of this application.

1. Transportation means

The transportation means in embodiments of this application may include a land transport means, a water transport means, an air transport means, an industrial device, an agricultural device, an entertainment device, or the like. For example, the transportation means may be a vehicle. The vehicle is a vehicle in a broad sense, and may be a transport means (for example, a car, a bus, a subway, a high-speed railway, a motorcycle, a flight vehicle, or a train), an industrial vehicle (for example, a forklift, a trailer, and a tractor), an engineering vehicle (for example, an excavator, a bulldozer, and a crane), agricultural equipment (for example, a lawn mower and a harvester), recreational equipment, a toy vehicle, a ship, a hovercraft, a submarine, an airplane, a helicopter, or the like. A specific type, a form, a function, and the like of the transportation means are not limited in embodiments of this application.

2. Automotive open system architecture (automotive open system architecture, AUTOSAR)

The AUTOSAR is a software architecture system jointly established by global automotive manufacturers, component suppliers, and other electronics, semiconductor, and software system companies, where members maintain a development partnership. The AUTOSAR is committed to developing open and standardized software architectures for the vehicle industry.

In some examples, an in-vehicle system may implement vehicle control based on the AUTOSAR to ensure vehicle safety, or implement functions such as entertainment and communication.

In some examples, an in-vehicle system of an automotive electronic and electrical architecture (E/E architecture) may implement vehicle control based on the AUTOSAR to ensure vehicle safety, or implement functions such as entertainment and communication. The E/E architecture integrates electronic hardware, network communication, a software application, and a harness into a design architecture of a complete system. For example, the E/E architecture includes a plurality of electronic control units (electronic control units, ECUs) distributed at a plurality of positions of the transportation means. The plurality of ECUs are configured to control an electrical system, an electronic system, an embedded system of an automotive subsystem, and the like, to implement the foregoing plurality of functions. An AUTOSAR software platform is deployed in the ECU. The ECUs may communicate with each other through a controller area network (controller area network, CAN) bus, a local interconnect network (local interconnect network, LIN) bus, or the like.

3. Domain controller architecture

With continuous development of in-vehicle technologies such as intelligent driving, vehicle functions are becoming more powerful, and technological complexity is increasing accordingly. Data related to intelligent driving, cockpit, chassis control, and other functions is growing exponentially. In this case, to ensure real-time, safe, and reliable implementation of various functions of an intelligent vehicle, an architecture of an in-vehicle system develops toward a domain controller architecture or a more centralized control structure.

Hardware of the in-vehicle system of the domain controller architecture adopts an architecture of a centralized domain controller (domain control unit, DCU) with high computing power and a plurality of corresponding ECUs. Software of the in-vehicle system of the domain controller architecture adopts an architecture in which an AUTOSAR adaptive platform (adaptive platform, AP) ("AUTOSAR AP" for short) is integrated with an AUTOSAR classic platform (classic platform, CP) ("AUTOSAR CP" for short). The in-vehicle system of the domain controller architecture is based on the AUTOSAR and can provide various basic services and abstract services of hardware capabilities for upper-layer applications.

The AUTOSAR AP is usually used in a scenario that has a specific requirement on real-time performance, a specific requirement on functional safety, and a high requirement on computing power, for example, used in a future-oriented intelligent vehicle scenario, for example, used in fields such as autonomous driving and advanced assisted driving. For example, the AUTOSAR AP may be used for sensor fusion processing, dynamic update during running, communication with a transportation infrastructure/cloud server during autonomous driving, OTA, cross-domain computing, and the like in an intelligent vehicle scenario, to ensure real-time, safe, and reliable implementation of a plurality of functions of the intelligent vehicle. The AUTOSAR CP is generally used in scenarios that have high requirements on real-time performance and functional safety, and a low requirement on computing power, such as engine control and a braking system.

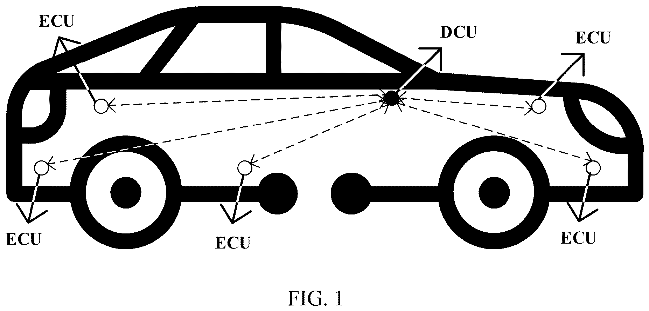

For example, FIG. 1 is an example diagram of deployment of a domain controller on a vehicle according to an embodiment of this application. As shown in FIG. 1, the domain controller includes a high-computing-power domain controller DCU and ECUs distributed on a plurality of positions of the vehicle. There is a communication connection between the DCU and the ECU.

An AUTOSAR AP may be deployed in the DCU shown in FIG. 1, to ensure high computing power of the DCU. An AUTOSAR CP may be deployed in the ECU shown in FIG. 1.

4. Multi-domain controller (multi-domain controller, MDC) architecture

With development of the automotive industry, signals that need to be received, analyzed, and processed by vehicles become more complex, and are sharply increased in quantity. A conventional one-to-one correspondence mode between functions and ECUs or a single domain controller cannot meet requirements. In this case, a domain controller is divided, based on functions of parts of the vehicle, into several domains (also referred to as "function domains"), to implement relatively centralized in-vehicle computing required for integrating a plurality of functions, for example, human-computer interaction in a cabin, screen interconnection display, and data management.

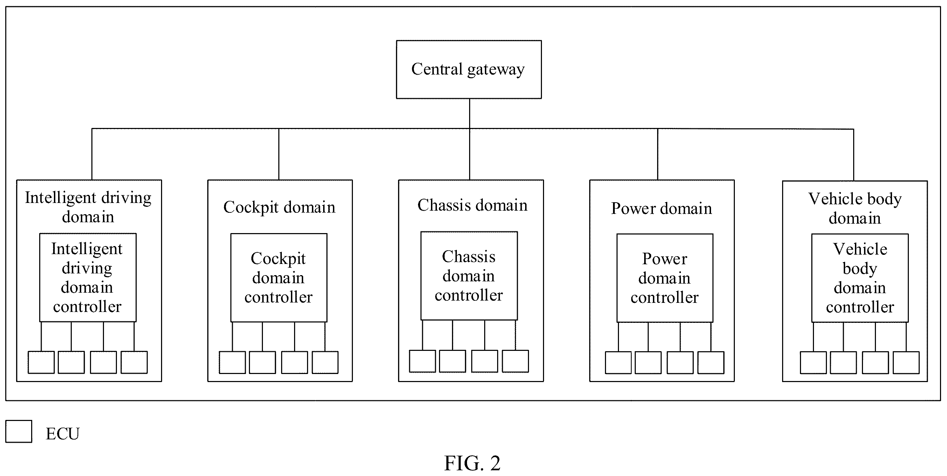

In an example, as shown in FIG. 2, a domain controller (for example, a DCU) may be divided, based on functions of parts of the vehicle, into several domains (also referred to as "function domains"), for example, an intelligent driving domain, a cockpit domain, a chassis domain, a power domain, and a vehicle body domain. However, domains that are divided by different manufacturers based on their own concepts may be different. In addition, a plurality of domains can be integrated across domains to form a fusion domain. This is not specifically limited in this application.

The intelligent driving domain is mainly used to provide services such as autonomous driving sensing and decision-making, for example, image information receiving, image information processing and determining, data processing and computing, navigation and route planning, and quick determining and decision-making on a real-time situation. The intelligent driving domain needs to process algorithms at sensing, decision-making, and control layers, and has the highest requirements on software and hardware of the domain controller. The cockpit domain is mainly used to control various electronic information system functions in an intelligent cockpit of the vehicle, for example, a control system, an in-vehicle infotainment system, a head-up display, a seat system, an instrument system, a rear-view mirror system, a driving behavior monitoring system, and a navigation system. The chassis domain is mainly used to control a driving behavior and a driving posture of the vehicle, and has functions including but are not limited to braking system management, vehicle transmission system management, traveling system management, steering system management, vehicle speed sensor management, vehicle body posture sensor management, air suspension system management, airbag system management, and the like. The power domain is mainly used to control a powertrain of the vehicle, optimize power performance of the vehicle, and ensure power safety of the vehicle, for example, perform engine management, gearbox management, battery management, power distribution management, emission management, speed limit management, and fuel and electricity saving management. The vehicle body domain is mainly used to control various vehicle body functions, including but not limited to control of a vehicle front lamp, a vehicle rear lamp, an interior decoration lamp, a vehicle door lock, a vehicle window, a skylight, a wiper, an electric trunk, a smart key, an air conditioner, an antenna, gateway communication, and the like.

As shown in FIG. 2, each function domain may include a corresponding domain controller and a plurality of ECUs. For example, the ECU may be a single chip microcomputer (single chip microcomputer). The ECU may integrate a central processing unit (central processing unit, CPU), a read-only memory (read-only memory, ROM), a random access memory (random access memory, RAM), a timer (Timer), an analog to digital (analog to digital, A/D) circuit, a programmable logic controller (programmable logic controller, PLC), an input/output (input/output, I/O) interface (for example, a universal serial bus (universal serial bus, USB) interface, and a universal asynchronous receiver/transmitter (universal asynchronous receiver/transmitter, UART) interface) that are of a computer on a single chip, to form a chip-level computer for different combination control in different application scenarios.

It should be noted that the domain controller architecture is merely used as an example in embodiments of this application. The solution provided in embodiments of this application is also applicable to another in-vehicle communication architecture that can meet an exponentially increasing transmission requirement of communication data, for example, a central controller architecture that may appear in the future. For example, the central controller architecture is a vehicle centralized electrical and electronic architecture (vehicle centralized electrical and electronic architecture) like a vehicle-mounted computer and a vehicle computer and zone concept architecture (vehicle computer and zone concept architecture).

In addition, specific structures of high-computing-power units and distributed units distributed at a plurality of positions in the vehicle in the domain controller architecture are not limited in this application. For example, the distributed units distributed at the plurality of positions in the vehicle may alternatively be MCUs or region control units. Optionally, the distributed units distributed at the plurality of positions in the vehicle may be low-computing-power units.

5. Ethernet

As a mature and open standard and a technology that can be continuously updated, the Ethernet can meet a communication requirement of an intelligent vehicle or even an autonomous vehicle. For example, the Ethernet may be 10M Ethernet, 100M Ethernet, gigabit Ethernet (gigabit Ethernet, GE) (also referred to as gigabit Ethernet), 10 gigabit Ethernet (10 gigabit Ethernet, 10GE) (also referred to as 10 gigabit Ethernet), 25GE, 100GE, or the like.

In embodiments of this application, the domain controller architecture may perform communication based on an Ethernet (for example, a switched Ethernet). For example, the plurality of processors of the domain controller may communicate with each other based on the Ethernet. For another example, the processor of the domain controller may communicate with the ECU based on the Ethernet.

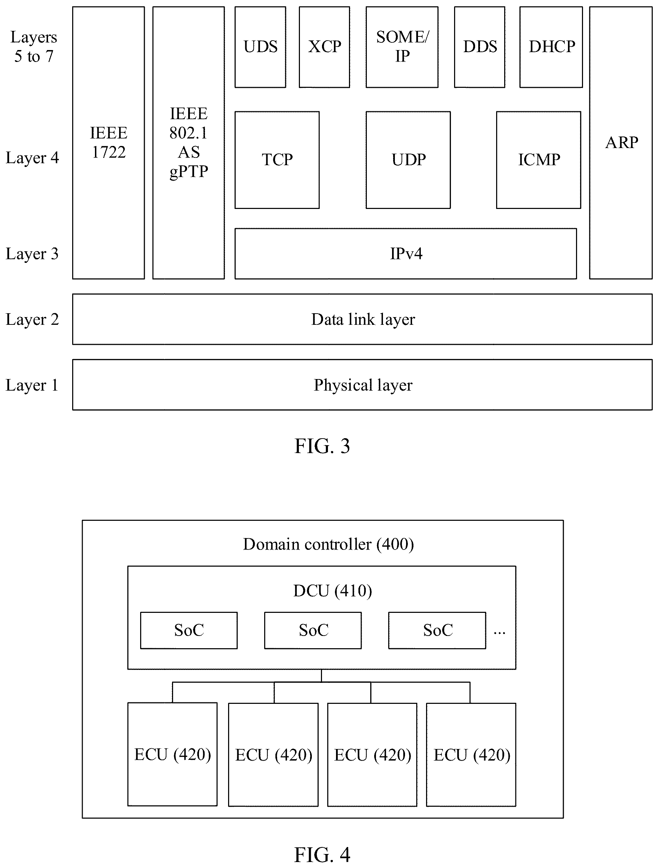

In an example, layers of the Ethernet protocol may be obtained through a layer division manner proposed based on an open system interconnection model (open system interconnection, OSI) model. As shown in FIG. 3, an automotive Ethernet protocol architecture may be divided into seven layers. Layers 5 to 7 are application layers, layer 4 is a transport layer, layer 3 is a network layer, layer 2 is a data link layer, and layer 1 is a physical layer.

The physical layer (for example, BroadR-Reach) is mainly used to implement Ethernet communication, for example, implement 100 Mbps Ethernet communication. The data link layer (for example, a standard Ethernet MAC+a virtual local area network (virtual local area network, VLAN)) may be used to support a vehicle in implementing functions such as determinism, reliability, and a safety mechanism.

As shown in FIG. 3, layers 3 to 7 may include IEEE 1722, IEEE 802.1 AS gPTP, a transmission control protocol (transmission control protocol, TCP)/Internet protocol (Internet protocol, IP) protocol suite, scalable service-oriented middleware over the Internet protocol (Internet Protocol, IP) (Scalable service-Oriented MiddlewarE over IP, SOME/IP), and a data distribution service (Data Distribution Service, DDS).

The IEEE 802.1 AS gPTP is mainly used to implement clock synchronization. IEEE 1722 is mainly used for streaming media transmission. The TCP/IP protocol suite is mainly used to provide support for an upper-layer protocol. For example, the TCP/IP protocol suite may serve as a bridge between a higher-layer application requirement and a network layer protocol, and provide a service, so that a higher-layer software application can be used over the Internet. The TCP/IP protocol suite may include but is not limited to the Internet protocol version 4 (Internet Protocol version 4, IPv4), the transmission control protocol (Transmission Control Protocol, TCP), the user datagram protocol (User Datagram Protocol, UDP), the Internet control message protocol (Internet Control Message Protocol, ICMP), the address resolution protocol (Address Resolution Protocol, ARP), the dynamic host configuration protocol (Dynamic Host Configuration Protocol, DHCP), the universal measurement and calibration protocol (Universal Measurement and Calibration Protocol, XCP), the unified diagnostic service (unified diagnostic service, UDS) protocol, and the like that are shown in FIG. 3.

The SOME/IP and DDS are middleware for automotive Ethernet communication, and are mainly used to transmit application data.

In embodiments of this application, the SOME/IP may be further used to provide time information related to packet receiving and sending, for example, packet sending time corresponding to application data.

The DDS provides a QoS mechanism. Based on the QoS mechanism, the DDS can allocate bandwidth to each service based on a QoS level when bandwidth resources are limited, thus providing end-to-end service quality guarantee. For example, voice, video, and important data applications can be configured with higher QoS levels on a network device to preferably obtain higher bandwidth, so that services are guaranteed.

6. System on chip (system on chip, SoC) (also referred to as a single-chip system)

In an example, the domain controller (for example, the DCU) may include a system-level chip such as a SoC.

The SoC integrates an entire information processing system on a chip. In brief, the SoC is a very large-scale integrated circuit that extends audio and video functions and dedicated interfaces based on the CPU. With features of high performance, low power consumption, and high flexibility, the SoC enables a single chip to implement functions of a complete electronic system, for example, implement functions such as logic processing, image processing, storage processing, and artificial intelligence (artificial intelligence, AI) processing that can be implemented by modules such as a CPU, a graphics processing unit (graphics processing unit, GPU), a micro processing unit (micro processing unit, MPU), a RAM, an analog to digital converter (analog to digital converter, ADC), a digital to analog converter (digital to analog converter, DAC), a modem (modem), and a digital signal processor (digital signal processor, DSP). Some SoCs further integrate a power management module and control modules of various external devices. In addition, distribution and utilization of each bus need to be considered.

In embodiments of this application, the domain controller may include a plurality of SoCs, to meet exponentially increasing in-vehicle related data. In an example, the SoC may process 8 GB of in-vehicle related data per second.

The plurality of SoCs may be separately used for different services, or may collaborate to complete a same service. The plurality of SoCs may be connected through a high-speed serial computer extended bus (peripheral component interconnect express, PCIE) or the Ethernet, to form a dual-host or host-device architecture, so as to complete a same service or different services.

In some examples, one SoC may be a SoC including a plurality of cores, which is referred to as a "multi-core SoC" for short. A core of the SoC (referred to as a "SoC core" for short) is a core circuit responsible for control and information processing functions in the SoC, excluding package and auxiliary circuits (for example, a pin interface circuit, a power supply circuit, and a clock circuit). The SoC core is basically a completely independent processing unit, and can read instructions from an internal memory and execute control and computing tasks specified by the instructions.

7. OTA

The OTA is a technology for remotely managing firmware, data, and applications on devices through a communication network. Generally, the OTA technology is mainly implemented in three steps: First, to-be-updated software is uploaded to a tool development platform or a tool optimization platform. Then, the platform transmits the to-be-updated software to a terminal side. Finally, the terminal side automatically updates the software.

Generally, OTA may be classified into two types. One type is firmware upgrade (firmware over the air, FOTA), which means that a new firmware program, for example, a firmware program of a control system corresponding to an engine, a motor, a gearbox, a chassis, and the like of the vehicle, is written without changing an original accessory on the terminal side, to upgrade a device that has a networking function. The other type is software upgrade (software over the air, SOTA), which means that an application is upgraded based on an operating system, for example, an in-vehicle map, a human-computer interaction interface, and an audio and video entertainment system are upgraded. Embodiments of this application mainly relate to software upgrade.

It is known that, compared with a controller including only a single processor, a controller including a plurality of processors has higher computing power, higher flexibility, and easier combination and expansion. Therefore, a corresponding function can be implemented more efficiently and reliably. However, the controller including a plurality of processors also needs to face difficulties. Taking domain control with N*SoC+ECU (N is a positive integer, and N>1) as an example, main difficulties include Difficulty 1 to Difficulty 3.

Difficulty 1: Regardless of communication between SoCs, communication between SoC and ECU, or hardware design, the domain controller is relatively complex. Therefore, there may be some compatibility and adaptability problems. In this case, although the SoCs or the SoC and the ECU can communicate with each other by using the Ethernet or the PCIE, a communication latency still exists.

Difficulty 2: The domain controller involves allocation of resources such as computing power, memory, and bandwidth of a plurality of SoCs among a plurality of service applications. Therefore, compared with a domain controller including a single SoC, the domain controller has a greater challenge in resource allocation. Based on a conventional resource allocation manner, manual allocation or adjustment is required, resulting in a great loss of human and material resources. In addition, resources that are manually allocated or adjusted cannot be considered globally. Therefore, resource utilization is low, and a waste of resources is caused.

Difficulty 3: Services of SoCs of the domain controller may be associated. Therefore, during upgrade and update, consistency of software versions corresponding to the SoCs needs to be considered, or an upgrade and update sequence of the SoCs needs to be considered. If the updated software versions are inconsistent, a compatibility problem or an adaptability problem between the SoCs after the update may be caused. If the upgrade and update sequence of the SoCs is incorrect, a domain controller system may break down. In addition, if the SoCs need to be upgraded and updated synchronously, the domain controller needs to support this upgrade manner.

To resolve the foregoing problem, an embodiment of this application provides a resource allocation method for automatically implementing resource deployment from an overall perspective of a controller, to improve efficiency of resource allocation or adjustment by a plurality of processors for a plurality of service applications, improve properness and scientificity of resource allocation or adjustment, and ensure a low communication latency and low power consumption in a process in which the domain controller performs a corresponding service. Further, based on the resource allocation method provided in embodiments of this application, adaptive optimization may be further performed on a resource configuration strategy, to further improve properness and scientificity of resource allocation or adjustment, and further reduce a communication latency in a process in which the domain controller performs a corresponding service.

The following specifically describes the resource allocation method provided in embodiments of this application with reference to the accompanying drawings.

The controller in embodiments of this application may be a domain controller on a transportation means (for example, a vehicle), a controller in a terminal device, a controller in another embedded device, or another device having a controller including a plurality of processors. This is not specifically limited in embodiments of this application.

For example, the terminal device in embodiments of this application may include but is not limited to a smartphone (including a foldable smartphone and a non-foldable smartphone), a netbook, a tablet computer, a smartwatch, a smart band, a phone watch, a smart camera, a palmtop computer, a personal computer (personal computer, PC), a robot, a personal digital assistant (personal digital assistant, PDA), a portable multimedia player (portable multimedia player, PMP), an augmented reality (augmented reality, AR)/virtual reality (virtual reality, VR) device, a smart home device, a television, a projection device, a somatic game console in a human-computer interaction scenario, or the like. The embedded device in embodiments of this application may include but is not limited to a printer, a copier, a facsimile machine, a biochemical analyzer, a blood analyzer, a switch, a router, an industrial computer, an uncrewed aerial vehicle, an automated teller machine (automated teller machine, ATM), and the like. A specific function and a form of a device including the controller are not specifically limited in embodiments of this application.

For example, FIG. 4 is a diagram of a structure of a controller according to an embodiment of this application by using a domain controller including a plurality of SoCs as an example.

As shown in FIG. 4, a domain controller 400 may include a DCU 410 and a plurality of corresponding ECUs 420. The DCU 410 includes a plurality of processors with high computing power (an example in which the processor is a SoC is used in FIG. 4). The DCU 410 and the ECU 420 are in communication connection. The plurality of SoCs in the DCU 410 may also be in communication connection.

The SoC is a circuit having an information processing capability. In an implementation, the SoC may be a circuit having an instruction reading and operation capability, for example, a CPU, an MPU, a GPU, a DSP, an ADC, a DAC, or a modem processor. In another implementation, the SoC may implement a specific function by using a logical relationship of a hardware circuit, and the logical relationship of the hardware circuit is fixed or reconfigurable. For example, the SoC is a hardware circuit implemented by an application-specific integrated circuit (application-specific integrated circuit, ASIC) or a programmable logic device (programmable logic device, PLD) of the SoC, for example, a field-programmable gate array (field-programmable gate array, FPGA). In the reconfigurable hardware circuit, a process in which the SoC loads a configuration document to implement hardware circuit configuration may be understood as a process in which the SoC loads instructions to implement functions of a part or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

Different SoCs may be independent components, or may be integrated together. This is not limited in embodiments of this application.

A memory may be further disposed in the SoC, and is configured to store instructions and data. In some embodiments, the memory in the SoC is a cache. The memory may store instructions or data just used or cyclically used by the SoC. If the instructions or the data needs to be used again, the SoC may directly invoke the instructions or the data from the memory. This avoids repeated access, reduces waiting time of the SoC, and improves system efficiency.

In some embodiments, the SoC may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It should be understood that an interface connection relationship between modules illustrated in embodiments of this application is merely an illustrative description, and does not constitute a limitation on a structure of the domain controller. In some other embodiments of this application, the domain controller may alternatively use an interface connection manner different from that in the foregoing embodiment, or use a combination of a plurality of interface connection manners.

The CPU is a computing core and a control core of the SoC. The CPU includes an arithmetic unit, a controller, a register, and a data, control, and status bus for associating the arithmetic unit, the controller, and the register. An operation principle of the CPU can be divided into four phases: fetch (fetch), decode (decode), execute (execute), and writeback (writeback). For example, the CPU may fetch an instruction from the memory or the cache, place the instruction in an instruction register, decode the instruction, and execute the instruction.

The MPU can be considered as a small CPU that can implement functions that can be implemented by the CPU.

The GPU is a microprocessor for image processing, and is used for graphics rendering. The SoC may include one or more GPUs, and the GPUs execute program instructions to generate or change display information.

The DSP is configured to process a digital signal. In addition to a digital image signal, the DSP may further process another digital signal. For example, the DSP may perform processing such as collection, transformation, filtering, estimation, enhancement, compression, and recognition on a signal in a digital form via a computer or a dedicated processing device, to obtain a required signal form.

The ADC is mainly configured to convert an analog signal such as a temperature, pressure, sound, a fingerprint, or an image generated in the real world into a digital form that is easier to process. A function of the DAC is reverse to that of the ADC, and the DAC modulates a digital signal into an analog signal.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to a baseband processor for processing. In some embodiments, the modem processor may be an independent component. In some other embodiments, the modem processor may be independent of the SoC, and is disposed in a same component as another functional module.

The NPU is a neural-network (neural-network, NN) computing processor. The NPU quickly processes input information by referring to a structure of a biological neural network, for example, by referring to a transfer mode between human brain neurons, and may further continuously perform self-learning. Applications such as intelligent cognition of the domain controller, for example, image recognition, facial recognition, speech recognition, and text understanding, may be implemented through the NPU.

The TPU is configured to accelerate computation of a neural network.

The DPU is a programmable engine dedicated to a convolutional neural network (convolutional neural networks, CNN). The DPU may include a register configuration module, a data controller module, and a convolution computing module. The convolutional neural network deployed in the DPU may include but is not limited to a visual geometry group (visual geometry group, VGG), a residual neural network (residual neural network, ResNet), a YOLO (you only look once), a single-phase target detection (single shot multiBox detector, SSD), a lightweight neural network (for example, MobileNet), a feature pyramid network (feature pyramid network, FPN), and the like.

The ECU 420 is configured to: properly reduce a frequency and a specification of the DCU 410, and integrate peripheral interfaces such as a memory, a counter, a USB, an A/D converter, a UART, a PLC, and a direct memory access (direct memory access, DMA), and even a display screen drive circuit on a single chip, to form a chip-level computer that can provide different combination controls for different application scenarios.

It can be understood that the structure shown in this embodiment of the present invention does not constitute a specific limitation on a domain controller. In some other embodiments of this application, the domain controller may include more or fewer components than those shown in the figure, or some components may be combined, or some components may be split, or different component layouts may be used. The components shown in the figure may be implemented by hardware, software, or a combination of software and hardware.

In addition, the DCU in this embodiment of this application is merely used as an example of a domain controller. A specific name and a function of the domain controller are not limited in embodiments of this application. For example, the domain controller may alternatively be a DCM (domain control module) or an MDC (multi-domain controller). The ECU in this embodiment of this application is merely used as an example of a control unit. A specific name and function of the control unit are not limited in embodiments of this application. For example, the control unit may alternatively be a micro controller unit (micro controller unit, MCU).

The following specifically describes a resource allocation method provided in embodiments of this application with reference to the accompanying drawings.

In an example, the resource allocation method provided in this embodiment of this application may be performed after the controller is powered on.

In an example, the resource allocation method provided in this embodiment of this application may be performed when a service application corresponding to the controller changes. For example, the change of the service application corresponding to the controller may be in an OTA scenario. The change of the service application may include but is not limited to an increase of service applications, a decrease of service applications, a service change, and the like.

In an example, the resource allocation method provided in this embodiment of this application may be performed when a preset condition is met. For example, the preset condition may include but is not limited to being at a preset moment, meeting a preset periodicity, receiving a preset user operation, and the like.

An execution occasion of the resource allocation method is not limited in embodiments of this application, and may be determined based on a specific setting.

In some embodiments, the resource allocation method provided in this embodiment of this application may be directly applied to the controller, for example, including but not limited to a domain controller (for example, a domain controller on a transportation means like a vehicle), a terminal device, or a controller in another embedded device. For example, the terminal device is a smartphone, a tablet computer, a PC, a robot, or a smart home device. The embedded device is a switch, an industrial computer, or the like. This is not limited in embodiments of this application. Based on the method, resources of a plurality of processors in the controller can be efficiently and properly allocated or adjusted for a plurality of service applications of the domain controller, the terminal device, or the another embedded device.

In some embodiments, the resource allocation method provided in this embodiment of this application may be applied to a resource allocation simulation device. The resource allocation simulation device may obtain, based on the resource allocation method provided in this embodiment of this application, a resource configuration strategy for the controller, for example, a controller in the domain controller, the terminal device, or the another embedded device, apply the resource configuration strategy to the controller, and finally efficiently and properly allocate or adjust the resources of the plurality of processors in the controller to the plurality of service applications of the domain controller, the terminal device, or the another embedded device.

For example, resource allocation is performed based on the resource allocation simulation device, and (a) in FIG.

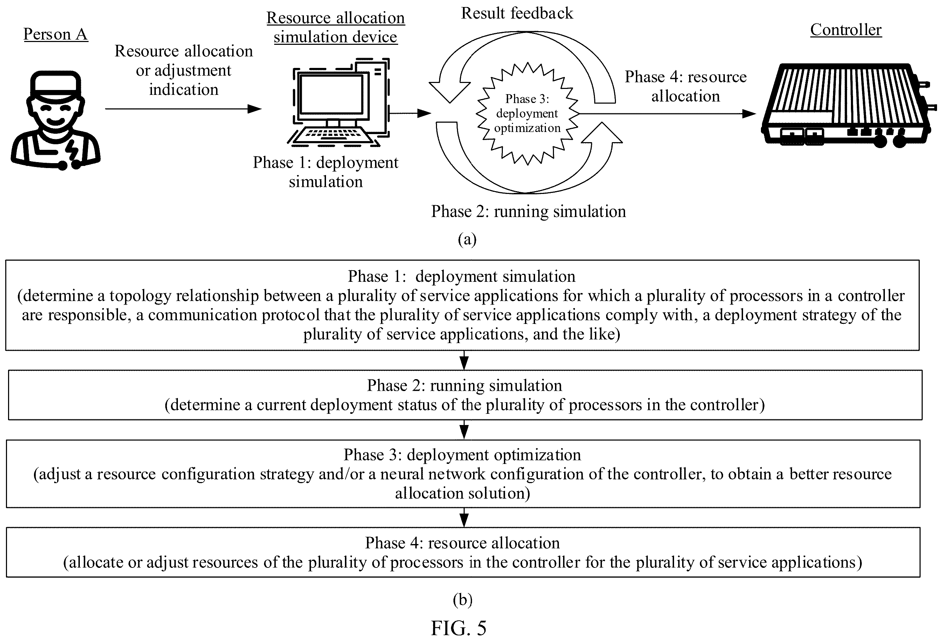

5 is a diagram of an architecture of a resource configuration system. The architecture shown in (a) in FIG. 5 includes a resource allocation simulation device and a controller. The resource allocation simulation device is configured to: determine, based on a resource allocation or adjustment indication operation of a person (for example, a person A) responsible for resource adjustment, a resource configuration solution of the plurality of processors in the controller based on related resource configuration information for the controller, and apply the resource configuration solution to the controller.

Regardless of whether resource allocation/adjustment of the controller is directly applied to the controller or is performed based on the resource allocation simulation device, the resource configuration solution of allocating the plurality of processors in the controller to a plurality of service applications based on the related resource configuration information for the controller may mainly include Phase 1 to Phase 4 shown in (b) in FIG. 5.

Phase 1: deployment simulation

Phase 1 is used to determine, based on the related resource configuration information (for example, a first resource configuration strategy) for the controller, a topology relationship between the plurality of service applications for which the plurality of processors in the controller are responsible, a communication protocol that the plurality of service applications comply with, and a deployment strategy of the plurality of service applications.

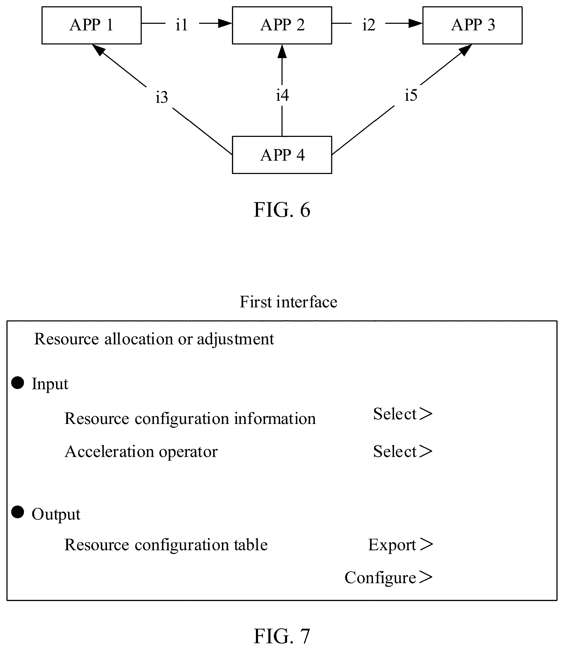

The topology relationship between the plurality of service applications indicates an association relationship (or referred to as a "sending/receiving relationship") between the plurality of service applications and a communication interface between the plurality of applications. For example, FIG. 6 is a diagram of a topology relationship between a plurality of service applications. There is a service association between an APP 1 and an APP 4, for example, a function of the APP 1 depends on related data of the APP 4, and a communication interface between the APP 1 and the APP 4 is i3. There is a service association between an APP 2 and each of the APP 1 and the APP 4, for example, a function of the APP 2 depends on related data of the APP 1 and the APP 4, a communication interface between the APP 2 and the APP 1 is i1, and a communication interface between the APP 2 and the APP 4 is i4. There is a service association between an APP 3 and each of the APP 2 and the APP 4, for example, a function of the APP 3 depends on related data of the APP 2 and the APP 4, a communication interface between the APP 3 and the APP 2 is i2, and a communication interface between the APP 3 and the APP 4 is i5.

A communication protocol that the plurality of service applications comply with is a protocol like a TCP, a shared memory (shared memory, SHM) protocol, and a distributed shared memory (distributed shared memory, DSHM) protocol. This is not specifically limited in embodiments of this application.

A deployment strategy of the plurality of service applications indicates one or more of a node on which the service application is run in a controller, a scheduling strategy, a priority strategy, and a life cycle strategy.

The node on which the service application is run in the controller is, for example, a processor on which the service application is run. For a multi-core processor, the node on which the service application is run in the controller is, for example, a core of a processor on which the service application is run. The "core" may also be understood as a "processing unit". The scheduling strategy used when the service application is run in the controller may include but is not limited to a completely fair scheduler (completely fair scheduler, CFS) strategy, a round robin (round robin, RR) strategy, and the like. This is not limited in embodiments of this application. For details, refer to the conventional technology. The priority strategy used when the service application is run in the controller indicates a sequence in which the plurality of service applications are invoked when the plurality of service applications are run in the controller. The life cycle strategy used when the service application is run in the controller indicates a task running/sleep time strategy of the service application. When a task of the service application is run, the service application needs to use a resource allocated by the controller to the service application. When the task of the service application is in a sleep state, the service application releases the resource allocated by the controller to the service application. The task running/sleep time of the service application may be periodically performed, or may be triggered based on an event. In an example, the life cycle strategy may be usually related to a function of a service application, a current running scenario of the controller, a preset periodicity, and the like. This is not specifically limited in embodiments of this application. For details, refer to the conventional technology.

For example, the first resource configuration strategy may be a file that complies with a protocol of an AP specification, for example, an ARXML file. The ARXML file includes but is not limited to the topology relationship between the plurality of service applications for which the plurality of processors in the controller are responsible, the communication protocol that the plurality of service applications comply with, the deployment strategy of the plurality of service applications, and the like.

In a possible implementation, when the resource allocation simulation device performs the resource allocation method in this embodiment of this application, the resource allocation simulation device may directly obtain the first resource configuration strategy from the controller, to evaluate a current resource deployment status of the controller and further perform deployment optimization.

In a possible implementation, in Phase 1, the first resource configuration strategy may be analyzed via a developed tool/platform/model or the like, to obtain the topology relationship between the plurality of service applications for which the plurality of processors in the controller are responsible, the communication protocol that the plurality of service applications comply with, and the deployment strategy of the plurality of service applications.

For example, as shown in FIG. 7, after receiving the first resource configuration strategy that is entered by the person A on a first interface through a first input channel provided by a resource allocation or adjustment function, the resource allocation simulation device or the controller may determine, based on the first resource configuration strategy, the topology relationship between the plurality of service applications for which the plurality of processors in the controller are responsible, the communication protocol that the plurality of service applications comply with, and the deployment strategy of the plurality of service applications. In an example, the first interface may be an existing tool development interface or an existing tool optimization interface, for example, an AUTOSAR platform interface, an ADSFI platform interface, or an MMC interface. Certainly, an input interface, an input mode, and the like of the first resource configuration strategy are not limited in embodiments of this application. For example, the first interface may alternatively be another interface having a resource configuration strategy input channel. For another example, the person A may enter the first resource configuration strategy to the first interface through dragging.

After the topology relationship between the plurality of service applications for which the plurality of processors in the controller are responsible, the communication protocol that the plurality of service applications comply with, and the deployment strategy of the plurality of service applications are determined, the resource allocation simulation device or the controller may also display the foregoing results, so that the person A can intuitively understand a current resource configuration status, and the person A can perform subsequent operations, such as optimization, resource allocation, and solution export. For example, the resource allocation simulation device or the controller may draw, on the first interface based on the first resource configuration strategy, the plurality of processor in the controller and the topology relationship between the service applications for which the plurality of processors are responsible, and match, based on the first resource configuration strategy, another resource configuration status, for example, the communication protocol that the plurality of service applications comply with and the deployment strategy of the plurality of service applications, to a corresponding processing unit or service application node.

Phase 2: running simulation

Phase 2 is used to determine a current deployment status of the plurality of processors in the controller based on the first resource configuration strategy, for example, a resource allocation status and a neural network configuration status.

The resource allocation status includes but is not limited to one or more of the following: load of a processing unit in each of the plurality of processors, memory load of each of the plurality of processors, a processing unit corresponding to each of the plurality of service applications, a QoS level corresponding to each of the plurality of service applications, and a running latency corresponding to each of the plurality of service applications. The neural network configuration status includes but is not limited to one or more of the following: a neural network type, a processing unit deployed in a neural network, and an acceleration operator.

In a possible implementation, in Phase 2, running the running files of the plurality of service applications may be simulated based on the first resource configuration strategy, to obtain a current deployment status like a resource allocation status and a neural network configuration status of the plurality of processors in the controller. The running file of the service application may include application code of the service application.

For example, a specific method for obtaining the current deployment status like the resource allocation status and the neural network configuration status of the plurality of processors in the controller may be shown as follows.

In some examples, when running the running files of the plurality of service applications is simulated based on the first resource configuration strategy, receive ports and transmit ports of the plurality of service applications may be determined based on the topology relationship between the plurality of service applications and code generated when the plurality of service applications are run. A processing unit corresponding to each service application may be determined based on the receive ports and the transmit ports of the plurality of service applications.

In some examples, when running the running files of the plurality of service applications is simulated based on the first resource configuration strategy, load of a processing unit in each of the plurality of processors may be obtained based on a data processing amount, a data processing frequency, and/or the like of the processing unit in each of the plurality of processors, a memory load of each of the plurality of processors is obtained based on an amount of data stored in a memory of each of the plurality of processors, memory usage, and the like, and a QoS level corresponding to each of the plurality of service applications is obtained based on quality of communication between the plurality of processors, quality of communication between the plurality of processing units, and/or the like. A basis and a specific method for determining the QoS level based on the communication quality are not limited in embodiments of this application.

In some examples, when running the running files of the plurality of service applications is simulated based on the first resource configuration strategy, a running latency corresponding to each of the plurality of service applications may be obtained based on a preset rule. For example, a running latency corresponding to each service application is obtained based on a running latency of a processor processing a same service and/or a running latency of a processing unit processing a same service. The running latency may be a global latency, or may be a local latency. A calculation basis and a specific method of the running latency are not specifically limited in embodiments of this application, and are determined based on a specific requirement and a configuration strategy.

In some examples, when running the running files of the plurality of service applications is simulated based on the first resource configuration strategy, the processing unit deployed in the neural network may be determined based on the processing unit corresponding to each of the plurality of service applications and a service type of the processing unit. It may be understood that services that the controller is responsible for running may be usually classified into two types: a common CPU service and a neural network analysis service. When the controller runs the neural network analysis service, related resource initialization, resource management, resource loading, and the like need to be performed through a dedicated port. Based on this, the processing unit deployed in the neural network may be determined based on an interface used when the controller runs a service.

In some examples, when running the running files of the plurality of service applications is simulated based on the first resource configuration strategy, if it is determined that the service is a neural network analysis service, a deep neural network model, for example, an open neural network exchange (open neural network exchange, ONNX) model, may be imported, and a neural network configuration status is obtained by parsing the ONNX model, for example, includes but is not limited to one or more of the following: a neural network type, a processing unit deployed in a neural network, and an acceleration operator. The neural network type may include but is not limited to VGG, ResNet, YOLO, SSD, MobileNet, FPN, and the like. The processing unit deployed in the neural network is, for example, an AI core (AI core, AIC) or an AI vector core (AI vector core, AIV). The acceleration operator is an acceleration operator supported by an acceleration interface of the acceleration operator supported by the controller. The acceleration interface is, for example, a Turbo application programming interface (application programming interface, API). The Turbo API is a set of a series of interfaces for computing acceleration. The acceleration operator may implement matrix acceleration computation through an NPU, or may run an operating system or perform complex logic computation through a CPU. The acceleration operator may include but is not limited to a sin function, a cos function, a SortIdx function, and the like.

In some examples, when running the running files of the plurality of service applications is simulated based on the first resource configuration strategy, load of a corresponding processing unit may be further updated based on resource usage such as resource consumption and resource preemption when the processing unit deployed in the neural network processes the neural network analysis service.

Phase 3: deployment optimization

Phase 3 is used to adjust the resource configuration strategy and/or the neural network configuration of the controller, to obtain a better resource allocation solution.

For example, when the resource allocation status is not satisfied (for example, a preset condition is not met) after running simulation, deployment optimization may be triggered.

In a possible implementation, the deployment optimization may be mainly implemented by using the following S3.1 and S3.2.

S3.1: Simulate running, based on an obtained acceleration operator in N different scenarios, the running files corresponding to the plurality of service applications, to obtain N corresponding acceleration results.

Each acceleration result represents time consumed (namely, required duration) and a required resource for running the acceleration operator in a corresponding scenario.

In a possible implementation, S3.1 may specifically include: First, self-searching is performed with reference to application code of the service application, to identify a processing unit corresponding to an interface that supports the acceleration operator and an acceleration operator supported by the processing unit. Then, the running, based on the acceleration operator, the running files corresponding to the plurality of service applications in the N different scenarios is simulated based on specific situations of the processing unit that supports the acceleration operator and the acceleration operator supported by the processing unit, to obtain the N corresponding acceleration results.

The N different scenarios may be customized/automatically determined by the resource allocation simulation device, or may be obtained by the resource allocation simulation device based on a user-customized operation.

For example, the user may customize the N different scenarios in one or more of the following manners: customizing and selecting an interface to be accelerated, customizing an acceleration operator used by the interface, customizing and selecting an acceleration strategy of the interface to be accelerated, customizing and selecting a processing unit, customizing duration required for running the acceleration operator, and customizing a resource required for running the acceleration operator. For example, the user may customize the N different scenarios through a second interface. The second interface may be an existing tool development interface or tool optimization interface, for example, an AUTOSAR platform interface, an ADSFI platform interface, or an MMC interface. This is not limited in embodiments of this application.

In an example, when the APP 1, the APP 2, and the APP 3 are run, a specific situation in which a processor supports an acceleration operator and a case of the supported acceleration operator are shown in the following Table 1. There are a maximum of three acceleration scenarios when the APP 1 is run, there are a maximum of three acceleration scenarios when the APP 1 is run, and there are a maximum of three acceleration scenarios when the APP 3 is run.

Table 1

| APP ID | Acceleration operator | Processing unit |
|---|---|---|
| APP 1 | Sin | CPU |
| | | AIC |
| | | AIV |
| APP 2 | Cos | CPU |
| | | AIC |
| | | AIV |
| APP 3 | Cos | CPU |
| | | AIC |
| | | AIV |

Based on the case shown in Table 1, the user may set a maximum of $3\times3\times3=27$ acceleration scenarios when the APP 1, the APP 2, and the APP 3 are run.

For example, when the user runs, based on an obtained acceleration operator in the scenario shown in Table 1, the running files corresponding to the plurality of service applications, obtained acceleration results may be shown in the following Table 2.

Table 2

| APP ID | Acceleration operator | SoC ID | Processing unit | Duration cost | Resource cost |
|---|---|---|---|---|---|
| APP 1 | Sin | SoC 1 | CPU | 10.5 | 5 |
| | | | AIC | 8.5 | 10 |
| | | | AIV | 6 | 6 |
| APP 2 | Cos | SoC 1 | CPU | 10.5 | 7 |
| | | | AIC | 6 | 8 |
| | | | AIV | 7 | 9 |
| APP 3 | Cos | SoC 1 | CPU | 5.5 | 1 |
| | | | AIC | 20.5 | 4 |
| | | | AIV | 18 | 3 |
| APP 1 | Sin | SoC 3 | ... | ... | ... |

As shown in Table 2, when the SoC 1 is used to run a running file of the APP 1 based on the acceleration operator Sin, duration cost (or referred to as "time consumption cost") is 10.5 and resource cost is 5 for the CPU, duration cost is 8.5 and resource cost is 10 for the AIC, and duration cost is 6 and resource cost is 6 for the AIV. Similarly, as shown in Table 2, when the SoC 1 is used to run a running file of the APP 2 based on the acceleration operator Cos, duration cost is 10.5 and resource cost is 7 for the CPU, duration cost is 6 and resource cost is 8 for the AIC, and duration cost is 7 and resource cost is 9 for the AIV. When the SoC 1 is used to run a running file of the APP 3 based on the acceleration operator Cos, duration cost is 5.5 and resource cost is 1 for the CPU, duration cost is 20.5 and resource cost is 4 for the AIC, and duration cost is 18 and resource cost is 3 for the AIV.

The duration cost shown in Table 2 represents required duration. A larger value of the duration cost indicates longer required duration. On the contrary, a smaller value of the duration cost indicates shorter required duration. The resource cost indicates required resources, such as a computing resource (for example, a CPU resource, an AIC resource, and an AIV resource), a storage resource, and a bandwidth resource. A larger value of the resource cost indicates more required resources. On the contrary, a smaller value of the resource cost indicates fewer required resources.

For example, the duration cost or the resource cost shown in Table 2 may be obtained based on a predefined evaluation basis, evaluation method, or calculation formula. For example, the duration cost may be global duration cost, or may be local duration cost. The resource cost may be obtained through weighted calculation based on load of a plurality of types of resources (such as a CPU, a memory, a bandwidth, an AIC, and an AIV). For example, greater load on the CPU/memory/bandwidth/AIC/AIV indicates higher resource cost, and smaller load on the CPU/memory/bandwidth/AIC/AIV indicates lower resource cost.

In an example, when a running file corresponding to a service application (for example, the APP 1) is run based on an obtained acceleration operator in the scenario shown in Table 1, resource load may be shown in the following Table 3:

Table 3

| SoC ID | CPU load | Memory load | Bandwidth load | AIC load | AIV load |
|--------|----------|-------------|----------------|----------|----------|
| SoC 1  | 45%      | 75%         | 55%            | 50%      | 55%      |
| SoC 2  | 60%      | 80%         | 45%            | 15%      | 75%      |
| SoC 3  | 55%      | 30%         | 30%            | 73%      | 49%      |

That is, when the SoC 1 is used to run the running file of the APP 1, CPU load is 45%, memory load is 75%, bandwidth load is 55%, AIC load is 50%, and AIV load is 55%. When the SoC 2 is used to run the running file of the APP 1, CPU load is 60%, memory load is 80%, bandwidth load is 45%, AIC load is 15%, and AIV load is 75%. When the SoC 3 is used to run the running file of the APP 1, CPU load is 55%, memory load is 30%, bandwidth load is 30%, AIC load is 73%, and AIV load is 49%.

It should be noted that a specific method for calculating the duration cost and the resource cost is not specifically limited in embodiments of this application.

S3.2: Adjust, based on the obtained N acceleration results, the resource configuration strategy and/or the neural network configuration of the controller, to obtain an adjustment result.

In an example, S3.2 may include: First, an optimal acceleration result is determined based on the obtained N acceleration results. Then, the resource configuration strategy (for example, a first resource configuration strategy) and/or the neural network configuration (for example, a first neural network configuration) of the controller are/is adjusted based on the determined optimal acceleration result, to obtain an adjustment result. The adjustment result includes an adjusted resource configuration strategy (for example, a second resource configuration strategy) and/or an adjusted neural network configuration (for example, a second neural network configuration).

In an example, the first resource configuration strategy and/or the first neural network configuration of the controller may be adjusted based on the N acceleration results by using a preset optimization method.

For example, the preset optimization method may be an optimization method based on an adaptive recommendation algorithm. The adaptive recommendation algorithm may include but is not limited to a resolution algorithm of a knapsack problem (knapsack problem). The knapsack problem can be described as follows: A group of items are given and each item has a weight and a value. Items are selected within a limited total weight of a knapsack, to make a total value of the items be the highest. For example, there are N (N is a positive integer greater than 1) items and a knapsack with a bearing capacity of V. The $i^{th}$ item has a value of w[i], and a value of v[i]. Items to be put in the knapsack need to be resolved among the N items, making a total weight of the items do not exceed the bearing capacity of the knapsack while maximizing a total value. In the knapsack problem, there is only one item of each type, and the item may be put in or not put in.

For example, f[i][v] indicates a maximum value that can be obtained by putting the first i items in the knapsack with the capacity of v. If only a strategy for the $i^{th}$ item (whether to put in or not) is considered, the problem can be converted into a problem that involves only the first i-1 items. Specifically, if the $i^{th}$ item is not put in, the problem is converted into "the first i-1 items are put in the knapsack with the capacity of v", and a value is f[i-1][v]. If the $i^{th}$ item is put in, the problem is converted into "the first i-1 items are put in the knapsack with a remaining capacity of v-w[i]". In this case, a maximum value that can be obtained is f[i-1][v-w[i]] plus a value v[i] obtained by putting in the $i^{th}$ item.

For example, an overall state transition equation is as follows:

$$f[i][v]=\max\{f[i-1][v],\ f[i-1][v-w[i]]+v[i]\}.$$

It should be noted that the foregoing state transition equation provides only a solution idea of the knapsack problem. For a case in which each item has a plurality of different attributes (for example, the duration cost and the resource cost shown in Table 2), a similar solution algorithm may also be used to obtain an optimal solution.

For example, as shown in Table 2, a plurality of first preferred scenarios may be determined based on duration cost in a plurality of scenarios, a plurality of second preferred scenarios may be determined based on resource cost in the plurality of scenarios, and then an optimal scenario is determined based on the plurality of first preferred scenarios and the plurality of second preferred scenarios, for example, the optimal scenario is located in both the plurality of first preferred scenarios and the plurality of second preferred scenarios. A specific algorithm is not limited in embodiments of this application. For another example, as shown in Table 2, an optimal scenario may be determined based on duration cost and resource cost in a plurality of scenarios by using a two-dimensional cost knapsack problem. The two-dimensional cost knapsack problem means that each item has two different kinds of costs, and the two kinds of costs (the duration cost and resource cost described in Table 1) should be paid to select the item. Each kind of cost has a maximum payable value (knapsack capacity), and items are selected to obtain a maximum value. For the two-dimensional cost knapsack problem and a specific resolution algorithm, refer to the conventional technology. This is not limited in embodiments of this application.

For another example, when each item has K (K is an integer greater than 2) different attributes, a corresponding resolution algorithm of a K-dimensional cost knapsack problem may be used to obtain an optimal solution.

In addition, it should be noted that Table 2 shows only an example of the acceleration result. An attribute corresponding to a specific scenario indicated by the acceleration result is not limited in embodiments of this application. For example, the acceleration result may further indicate another related cost.

In addition, it should be noted that specific data based on which the acceleration result is obtained and a manner of obtaining the specific data are not limited in embodiments of this application. For example, the specific data based on which the acceleration result is obtained may include intermediate data generated when the running files corresponding to the plurality of service applications are run based on an acceleration operator in each scenario. The intermediate data may be obtained in, but not limited to, one or more of the following manners: instrumentation and intermediate data obtaining model setup. The instrumentation is to insert a code "stub" into a corresponding position of the running file of the service application to print or collect required data. The intermediate data obtaining model setup is to set up an intermediate data obtaining model to print or collect data on a corresponding position when a running file of a required service application is run. For a specific method and process of obtaining intermediate data, refer to descriptions of the conventional technology.

It should be noted that, in the foregoing deployment optimization phase, optimization based on the adaptive recommendation algorithm is merely used as an example. A deployment optimization method is not specifically limited in embodiments of this application. For example, in some embodiments, the resource configuration strategy and/or the neural network configuration of the controller may alternatively be adjusted through manual optimization, to obtain an adjustment result. For another example, in some other embodiments, the resource configuration strategy and/or the neural network configuration of the controller may alternatively be adjusted by using an optimization method based on historical experience, to obtain an adjustment result. Alternatively, in some other embodiments, the resource configuration strategy and/or the neural network configuration of the controller may be comprehensively adjusted with reference to any plurality of manual optimization, optimization based on historical experience, and optimization based on the adaptive recommendation algorithm, to obtain an adjustment result.

In addition, the deployment optimization phase in this embodiment of this application may be implemented through one time of optimization, or may be implemented through a plurality of times of cyclic optimization and optimization result evaluation to optimize an optimization result. This is not specifically limited in embodiments of this application.

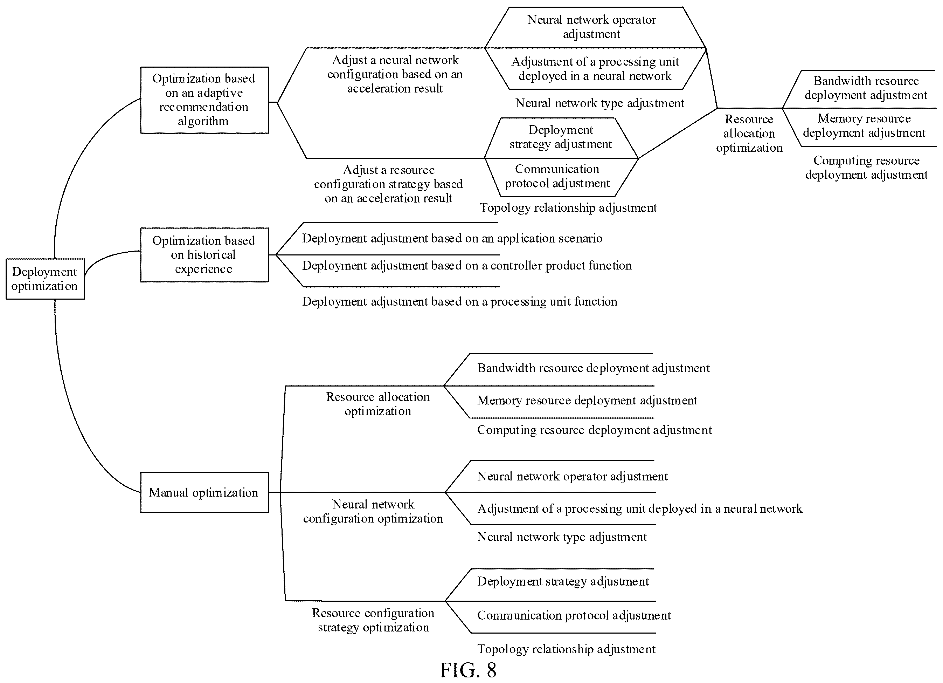

In an example, FIG. 8 is a diagram of several deployment optimization methods according to an embodiment of this application. Deployment optimization may be implemented through one or more of manual optimization, optimization based on historical experience, and optimization based on an adaptive recommendation algorithm shown in FIG. 8.

For example, resource configuration strategy optimization, neural network configuration optimization, or resource allocation optimization may be performed through manual optimization. A resource configuration strategy includes a topology relationship, a communication protocol, a deployment strategy, and the like. A neural network configuration includes a neural network type, a processing unit deployed in a neural network, an acceleration operator, and the like. Resource allocation includes computing resource deployment, memory resource deployment, and bandwidth resource deployment. Optimization based on historical experience may include but is not limited to deployment adjustment based on a controller function, a processing unit function, and a usage scenario.

As described above, in a conventional resource allocation manner such as manual optimization or optimization based on historical experience, manual allocation or adjustment is required, resulting in a great loss of human and material resources. In addition, resources that are manually allocated or adjusted cannot be considered globally. Therefore, resource utilization is low, and a waste of resources is caused. However, as shown in FIG. 8, according to an optimization method based on the adaptive recommendation algorithm provided in this embodiment of this application, the resource configuration strategy and/or the neural network configuration may be adjusted based on a plurality of acceleration results obtained by simulating running an application file of a service application in a plurality of scenarios, for example, the topology relationship, the communication protocol, the deployment strategy, the neural network type, the processing unit deployed in the neural network, the acceleration operator, and the like are adjusted. Based on the optimization method based on the adaptive recommendation algorithm provided in this embodiment of this application, running simulation and result evaluation of the service application in the plurality of scenarios may be performed, to obtain an optimal scenario in which high efficiency, a low latency, and high resource utilization can be implemented from a global perspective. Risks and solution advantages and disadvantages of a plurality of deployment scenarios are identified in advance, so that scientific and proper resource configuration strategy and/or neural network configuration adjustment can be subsequently performed based on one or more of the following: interface selection, acceleration operator selection, acceleration strategy selection, and processing unit selection that correspond to the optimal scenario, and a resource allocation solution can be further optimized.

Further, in some examples, to improve performance of the neural network, in this embodiment of this application, a neural network model may be optimized by simulating, based on a first resource configuration strategy, a neural network configuration status when a neural network analysis service is run. For example, the optimization method may include but is not limited to hyperparameter (hyper parameters) optimization, quantization (quantization) optimization, pruning (Pruning) optimization, and the like. The hyperparameter optimization refers to manual hyperparameter adjustment in the neural network model, for example, adjustment of a learning rate and a batch size (batch_size). The quantization optimization refers to adjustment of precision of data computing and memory access technologies, for example, INT4 quantization. The pruning optimization refers to reducing a quantity of model parameters, so that the model can be deployed by using a smaller memory, a smaller processor, and fewer hardware resources without affecting the neural network model.

In an example, after the resource configuration strategy and/or the neural network configuration are/is adjusted, a second resource configuration strategy in the obtained adjustment result indicates a topology relationship between a plurality of service applications and application information of each of the plurality of service applications. The application information includes a communication strategy and a deployment strategy of a corresponding service application.

For example, in an OTA scenario, a service application increase, a service application decrease, or a service change may cause the topology relationship between the plurality of service applications to change. In this case, the topology relationship between the plurality of service applications may be modified based on the service application change, for example, a service application is deleted, a service application is added, and association between service applications is modified.

The communication strategy indicates a communication interface used when the service application is run in the controller, and a communication protocol, a message structure (Struct), and a callback type (CallType) that correspond to the communication interface. For example, the communication protocol may include but is not limited to a TCP protocol, an SHM protocol, a DSHM protocol, and the like. The message structure may be indicated by using an information type/information name carried in a message. For example, the information type/information name may include but is not limited to navigation information (navigationinfo), chassis information (chassis), location information (locationinfo), and the like. The callback type may include but is not limited to a hybrid callback (Field), an event callback (Event), a remote call callback (Method), and the like, where the Field indicates that both the Event and the Method are supported.

The deployment strategy indicates one or more of a node on which the service application is run in the controller, a scheduling strategy, a priority strategy, and a life cycle strategy. A second neural network configuration in the obtained adjustment result includes one or more of the following: a neural network type, a processing unit deployed in a neural network, and an acceleration operator.

In an example, after the communication strategy of the service application is adjusted, a communication strategy shown in Table 4 may be obtained.

Table 4

| Interface ID | Message structure | Communication protocol | Callback type |
|---|---|---|---|
| i1 | navigationinfo | TCP | Field |
| i2 | chassis | DSHM | Event |
| i3 | locationinfo | SHM | Method |
| i4 | navigationinfo | TCP | Field |
| i5 | chassis | DSHM | Event |

In an example, after the deployment strategy of the service application is adjusted, a deployment strategy shown in Table 5 may be obtained.

Table 5

| APP ID | SoC ID | Priority | Scheduling strategy | Life cycle |
|--------|--------|----------|---------------------|------------|
| APP 1 | SoC 1 | 5 | CFS | 20 Hz |
| APP 2 | SoC 2 | 8 | RR | 20 Hz |
| APP 3 | SoC 3 | 16 | CFS | 50 Hz |
| APP 4 | SoC 1 | 7 | CFS | 20 Hz |

Alternatively, for a multi-core SoC including a plurality of processing units, as shown in the following Table 6, a node on which the service application is run in the obtained deployment strategy may further be specific to a core number.

Table 6

| APP ID | SoC ID | Core number | Priority | Scheduling strategy | Life cycle |
|--------|--------|-------------|----------|---------------------|------------|
| APP 1 | SoC 1 | 12 to 15 | 5 | CFS | 20 Hz |
| APP 2 | SoC 2 | 2 to 4 | 8 | RR | 20 Hz |
| APP 3 | SoC 3 | 1 to 3 | 16 | CFS | 50 Hz |
| APP 4 | SoC 1 | 1 to 4 | 7 | CFS | 20 Hz |

In an example, after the neural network configuration is adjusted, a neural network configuration shown in Table 7 may be obtained.

Table 7

| APP ID | Acceleration operator | Processing unit | Neural network type |
|--------|----------------------|-----------------|---------------------|
| APP 1 | Sin | CPU | VGG |
| APP 2 | Cos | AIC | ResNet |
| APP 3 | SortIdx | AIV | ResNet |
| APP 4 | Sin | CPU | VGG |

In some embodiments, after the resource configuration strategy and/or the neural network configuration of the controller are/is adjusted based on the obtained N acceleration results, to obtain the adjustment result (for example, the second resource configuration strategy and/or the second neural network configuration), the first interface may further display the adjustment result, to notify a user A of adjustment of the resource configuration strategy and/or the neural network configuration, so that the user A knows a related situation, or the user A may manually modify the resource configuration strategy and/or the neural network configuration or take a further measure (for example, re-perform Phase 2 and Phase 3) when the user A is not satisfied with the adjustment of the resource configuration strategy and/or the neural network configuration. This is not specifically limited in embodiments of this application. For example, after the resource configuration strategy and/or the neural network configuration of the controller are/is adjusted based on the obtained N acceleration results, to obtain the adjustment result (for example, the second resource configuration strategy and/or the second neural network configuration), the first interface may further display one or more adjustment results similar to those in Table 4 to Table 7.

Phase 4: resource allocation

The stage 4 is used to allocate or adjust resources of the plurality of processors in the controller for the plurality of service applications.

For example, as shown in FIG. 8, after the resource configuration strategy and/or the neural network configuration are/is adjusted based on the plurality of acceleration results obtained by stimulating running the application file of the service application in the plurality of scenarios, the resources of the plurality of processors in the controller may be allocated, based on an adjusted resource configuration strategy (for example, the second resource configuration strategy) and/or the adjusted neural network configuration (for example, the second neural network configuration), for the plurality of service applications, for example, computing resource deployment, memory resource deployment, and bandwidth resource deployment are performed. The computing resource is, for example, a CPU resource, an AIC resource, or an AIV resource.

In an example, corresponding SoCs, or corresponding SoCs and more specific core numbers may be allocated to the plurality of service applications based on an adjusted deployment strategy.

In an example, corresponding processing units, for example, CPU resources or parallel computing resources (for example, an AIC or an AIV), may be allocated to the plurality of service applications based on an adjusted neural network configuration.

In some embodiments, after the resources of the plurality of processors in the controller are allocated or adjusted for the plurality of service applications based on the second resource configuration strategy and/or the second neural network configuration, the first interface may further display resource allocation evaluation results of the plurality of processors in the controller after resource allocation is performed. The resource allocation evaluation result may include but is not limited to a resource load evaluation result and/or a latency evaluation result. For example, the resource allocation evaluation result may be shown in the following Table 8.

Table 8

| SoC ID | CPU load | Memory load | Bandwidth load | AIC load | AIV load | Latency (ms) |
|---|---|---|---|---|---|---|
| SoC 1 | 35% | 70% | 50% | 40% | 50% | 80 to 105 |
| SoC 2 | 55% | 75% | 40% | 15% | 55% | 50 to 95 |
| SoC 3 | 50% | 30% | 30% | 50% | 45% | 200 to 300 |

It may be understood that, based on the resource allocation method provided in this embodiment of this application, when the controller is powered on, a preset condition is met, a service application corresponding to the controller changes, or the like, the resource allocation simulation device or the controller may determine, through deployment simulation, a topology relationship between a plurality of service applications for which the plurality of processors in the controller are responsible, a communication protocol that the plurality of service applications comply with, and a deployment strategy of the plurality of service applications, then determine, through running simulation, a current deployment status (for example, a resource allocation status and a neural network configuration status) of the plurality of processors in the controller, then adjust, through deployment optimization, the resource configuration strategy and/or the neural network configuration of the controller to obtain a better resource allocation solution, and finally allocate, based on a deployment optimization result, the resources of the plurality of processors in the controller to the plurality of service applications corresponding to the plurality of processors. Based on this, resource allocation can be automatically implemented from an overall perspective of the controller, to improve efficiency of resource allocation or adjustment by the plurality of processors, improve properness and scientificity of resource allocation or adjustment, and ensure a low communication latency and low power consumption in a process in which the domain controller performs a corresponding service.

It should be noted that Table 1 to Table 8 are merely used as examples. During actual application, a specific situation of an acceleration operator supported by a processor, a specific situation of an obtained acceleration result, a specific situation of resource load when running files corresponding to the plurality of service applications are run based on obtained acceleration operators, a communication strategy, a deployment strategy, and a neural network configuration that are of a service application and that are adjusted after deployment optimization, a resource allocation evaluation result obtained after resource allocation is performed based on an optimization result, and the like are not limited.

In addition, the method provided in this embodiment of this application is applicable to any controller (for example, a domain controller, a controller in a terminal device, or a controller in an embedded device). A quantity of processors included in the controller, a quantity of service applications corresponding to the controller, and the like are not limited. For example, for a plurality of single-SoC virtual machines, the method provided in this embodiment of this application is also applicable. In addition, the method provided in this embodiment of this application may be further applied to resource allocation in a scenario like multi-hardware separation.

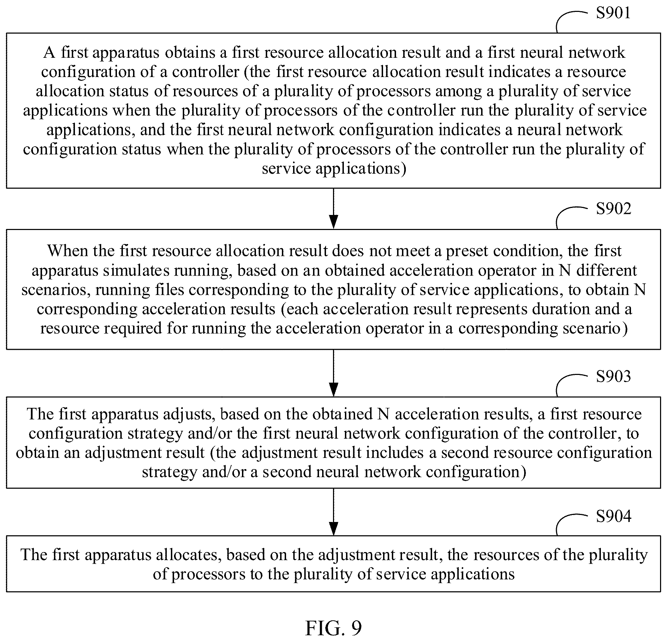

In an example, FIG. 9 is a flowchart of a resource allocation method according to an embodiment of this application. As shown in FIG. 9, the resource allocation method provided in this embodiment of this application may mainly include S901 to S904.

S901: A first apparatus obtains a first resource allocation result and a first neural network configuration of a controller, where the first resource allocation result indicates a resource allocation status of resources of a plurality of processors among a plurality of service applications when the plurality of processors of the controller run the plurality of service applications, and the first neural network configuration indicates a neural network configuration status when the plurality of processors of the controller run the plurality of service applications.

The first apparatus may be a controller, or may be a resource allocation simulation device. The controller may be a domain controller on a transportation means, for example, an intelligent driving domain controller, a cockpit domain controller, a chassis domain controller, a power domain controller, or a vehicle body domain controller. The controller may be the DCU 410 shown in FIG. 4. The controller includes a plurality of processors (for example, including the plurality of SoCs shown in FIG. 4), and the plurality of processors are configured to run a plurality of service applications.

In an example, the first resource allocation result includes one or more of the following: load of a processing unit in each of the plurality of processors, memory load of each of the plurality of processors, a processing unit corresponding to each of the plurality of service applications, a QoS level corresponding to each of the plurality of service applications, and a running latency corresponding to each of the plurality of service applications. The first neural network configuration includes one or more of the following: a neural network type, a processing unit deployed in a neural network, and an acceleration operator.

In an example, the first apparatus may first obtain a first resource configuration strategy, and then simulate running of running files of the plurality of service applications based on the first resource configuration strategy, to obtain a first resource allocation result and a first neural network configuration that are of the controller when the plurality of service applications are run.

In an example, the first apparatus obtains the first resource configuration strategy when the controller is powered on, a preset condition is met, a service application corresponding to the controller changes, or the like.

In an example, the first apparatus may display a first interface including a first input channel, where the first input channel may be used by a user to enter a resource configuration strategy, and the first apparatus may receive the first resource configuration strategy entered by the user through the first input channel. For example, the first interface may be a tool development interface or a tool optimization interface corresponding to the controller.

S902: When the first resource allocation result does not meet a preset condition, the first apparatus simulates running, based on an obtained acceleration operator in N different scenarios, running files corresponding to the plurality of service applications, to obtain N corresponding acceleration results. Each acceleration result represents duration and a resource required for running the acceleration operator in a corresponding scenario.

In a possible implementation, the first apparatus may first perform self-searching with reference to application code of a service application, to identify a processing unit corresponding to an interface that supports an acceleration operator and the acceleration operator supported by the processing unit, and then simulate the running, based on the acceleration operator in the N different scenarios, the running files corresponding to the plurality of service applications based on specific situations of the processing unit that supports the acceleration operator and the acceleration operator supported by the processing unit, to obtain the N corresponding acceleration results.

The N different scenarios may be customized/automatically determined by the resource allocation simulation device, or may be obtained by the resource allocation simulation device based on a user-customized operation.

In an example, the first apparatus may simulate running, based on the obtained acceleration operator in the N different scenarios, the running files corresponding to the plurality of service applications, and obtain intermediate data generated when the running files corresponding to the plurality of service applications are run based on the acceleration operator in each of the N different scenarios, and then generate, based on the intermediate data, N acceleration results corresponding to the N different scenarios.

For example, a manner in which the first apparatus obtains the intermediate data may include but is not limited to instrumentation and/or intermediate data setup.

S903: The first apparatus adjusts, based on the obtained N acceleration results, a first resource configuration strategy and/or the first neural network configuration of the controller, to obtain an adjustment result, where the adjustment result includes a second resource configuration strategy and/or a second neural network configuration.

In an example, the first apparatus may adjust, based on the obtained N acceleration results, the first resource configuration strategy and/or the first neural network configuration of the controller by using a preset optimization method. For example, the preset optimization method includes one or more of the following: manual optimization, optimization based on historical experience, and optimization based on an adaptive recommendation algorithm. The adaptive recommendation algorithm may include but is not limited to a resolution algorithm of a knapsack problem.

S904: The first apparatus allocates, based on the adjustment result, the resources of the plurality of processors to the plurality of service applications.

The resources of the plurality of processors may include but are not limited to one or more of the following: a computing resource, a memory resource, and a bandwidth resource. For example, the computing resource is a CPU resource, an AIC resource, an AIV resource, or the like.

For specific implementation details of the steps in FIG. 9, refer to the descriptions of the phases in (b) in FIG. 5 in the foregoing embodiment. Details are not described herein again.

It should be understood that the solutions in embodiments of this application may be properly combined for use, and explanations or descriptions of terms in embodiments may be cross-referenced or explained in embodiments. This is not limited.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be understood that, to implement functions in any one of the foregoing embodiments, the controller or the resource allocation simulation device includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, a controller or a resource allocation simulation device that has a resource allocation capability of a controller may be divided into functional modules. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely a logical function division. In actual implementation, another division manner may be used.

It should be further understood that the modules in the controller or the resource allocation simulation device may be implemented in a form of software and/or hardware. This is not specifically limited. In other words, an electronic device is presented in a form of functional module. The "module" herein may be an application-specific integrated circuit ASIC, a circuit, a processor that executes one or more software or firmware programs and a memory, an integrated logic circuit, and/or another component that can provide the foregoing functions.

In an optional manner, when software is used for implementing data transmission, the data transmission may be completely or partially implemented in a form of computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, and microwave, or the like). The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid-state drive solid state disk (SSD)), or the like.

Method or algorithm steps described in combination with embodiments of this application may be implemented by hardware, or may be implemented by a processor by executing software instructions. The software instruction may be formed by a corresponding software module. The software module may be stored in a RAM, a flash memory, a ROM, an EPROM, an EEPROM, a register, a hard disk, a removable hard disk, a CD-ROM, or a storage medium of any other form known in the art. For example, the storage medium is coupled to the processor, so that the processor can read information from the storage medium and write information to the storage medium. Certainly, the storage medium may be a component of the processor. The processor and the storage medium may be disposed in an ASIC. In addition, the ASIC may be located in the controller or the resource allocation simulation device. Certainly, the processor and the storage medium may exist as discrete components.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

## Claims

1. A resource allocation method, applied to a first apparatus, wherein the method comprises:

obtaining, by the first apparatus, a first resource allocation result and a first neural network configuration of a controller, wherein the controller comprises a plurality of processors, the plurality of processors are configured to run a plurality of service applications, the first resource allocation result comprises one or more of the following: load of a processing unit in each of the plurality of processors, memory load of each of the plurality of processors, a processing unit corresponding to each of the plurality of service applications, a quality of service QoS level corresponding to each of the plurality of service applications, and a running latency corresponding to each of the plurality of service applications, and the first neural network configuration comprises one or more of the following: a neural network type, a processing unit deployed in a neural network, and an acceleration operator;

when the first resource allocation result does not meet a preset condition, simulating, by the first apparatus, running, based on the acceleration operator in N different scenarios, running files corresponding to the plurality of service applications, to obtain N corresponding acceleration results, wherein each acceleration result represents duration and a resource required for running the acceleration operator in a corresponding scenario;

adjusting, by the first apparatus based on the N acceleration results, a first resource configuration strategy and/or the first neural network configuration of the controller to obtain an adjustment result, wherein the adjustment result comprises a second resource configuration strategy and/or a second neural network configuration; and

allocating, by the first apparatus based on the adjustment result, resources of the plurality of processors to the plurality of service applications.

2. The method according to claim 1, wherein before the obtaining, by the first apparatus, the first resource allocation result and the first neural network configuration of the controller, the method further comprises:

obtaining, by the first apparatus, the first resource configuration strategy, wherein the first resource configuration strategy comprises a topology relationship between the plurality of service applications and application information of each of the plurality of service applications, the application information comprises a communication protocol and a deployment strategy of the corresponding service application, the deployment strategy indicates one or more of a node on which the service application is run in the controller, a scheduling strategy, a priority strategy, and a life cycle strategy, and the node is a processor in the plurality of processors or a processing unit in a processor; and

the obtaining, by the first apparatus, the first resource allocation result and the first neural network configuration of the controller comprises:

simulating, by the first apparatus, running the running files of the plurality of service applications based on the first resource configuration strategy, and obtaining the first resource allocation result and the first neural network configuration of the controller when the plurality of service applications are run.

3. The method according to claim 2, wherein the obtaining, by the first apparatus, the first resource configuration strategy comprises:

obtaining, by the first apparatus, the first resource configuration strategy when a service application corresponding to the controller changes.

4. The method according to any one of claims 1 to 3, wherein the adjusting, by the first apparatus based on the N acceleration results, the first resource configuration strategy and/or the first neural network configuration of the controller comprises:

adjusting, by the first apparatus based on the N acceleration results, the first resource configuration strategy and/or the first neural network configuration of the controller by using a preset optimization method, wherein the preset optimization method comprises one or more of the following: an optimization method based on historical experience and an optimization method based on an adaptive recommendation algorithm.

5. The method according to claim 4, wherein the simulating, by the first apparatus, running, based on the acceleration operator in the N different scenarios, the running files corresponding to the plurality of service applications, to obtain the N corresponding acceleration results comprises:

obtaining, by the first apparatus, intermediate data generated when running, based on the acceleration operator in each of the N different scenarios, the running files corresponding to the plurality of service applications; and

generating, by the first apparatus based on the intermediate data, the N acceleration results corresponding to the N different scenarios.

6. The method according to claim 5, wherein the obtaining, by the first apparatus, the intermediate data generated when running, based on the acceleration operator in each of the N different scenarios, the running files corresponding to the plurality of service applications comprises:

obtaining, by the first apparatus through instrumentation and/or intermediate data obtaining module setup, the intermediate data generated when running, based on the acceleration operator in each of the N different scenarios, the running files corresponding to the plurality of service applications.

7. The method according to any one of claims 1 to 6, wherein the resources of the plurality of processors comprise one or more of the following: a computing resource, a memory resource, and a bandwidth resource.

8. The method according to any one of claims 2 to 7, wherein the obtaining, by the first apparatus, the first resource configuration strategy comprises:

   displaying, by the first apparatus, a first interface, wherein the first interface comprises a first input channel; and
   receiving, by the first apparatus, the first resource configuration strategy that is entered by a user through the first input channel.

9. The method according to claim 8, wherein after the adjustment result is obtained, the adjustment result is further displayed on the first interface.

10. The method according to claim 8 or 9, wherein the first interface is a tool development interface or a tool optimization interface corresponding to the controller.

11. The method according to any one of claims 1 to 10, wherein the first apparatus is the controller or a resource allocation simulation device.

12. The method according to any one of claims 1 to 11, wherein the controller is a domain controller, and the domain controller is divided, based on functions, into one or more of the following domains: an intelligent driving domain, a cockpit domain, a chassis domain, a power domain, and a vehicle body domain.

13. The method according to any one of claims 1 to 12, wherein the processor is a system on chip SoC.

14. The method according to any one of claims 1 to 13, wherein the controller is located on a transportation means.

15. A controller, wherein the controller comprises a plurality of processors, the plurality of processors are configured to support the controller in implementing functions corresponding to a plurality of service applications, and the controller is configured to implement the method according to any one of claims 1 to 10 and claims 12 to 14.

16. A resource allocation simulation device, wherein the resource allocation simulation device comprises:

   a communication interface, configured to perform communication between devices;
   a memory, configured to store computer program instructions; and
   a processor, configured to execute the computer program instructions, to support an in-vehicle system in implementing the method according to any one of claims 1 to 10 and claims 13 and 14.

17. An electronic device, wherein the electronic device comprises a controller, the controller comprises a plurality of processors, the plurality of processors are configured to support the controller in implementing functions corresponding to a plurality of service applications, and the controller is configured to implement the method according to any one of claims 1 to 10 and claims 12 to 14.

18. A control system, wherein the control system comprises the controller according to claim 15.

19. A transportation means, wherein the transportation means comprises the controller according to claim 15.

20. A readable storage medium, wherein the readable storage medium stores program instructions, and when the program instructions are executed by an apparatus, the method according to any one of claims 1 to 14 is implemented.

21. A chip system, wherein the chip system comprises a processing circuit and a storage medium, the storage medium stores program instructions, and when the program instructions are executed by the processing circuit, the method according to any one of claims 1 to 14 is implemented.

FIG. 1

FIG. 2

EP 4 708 047 A1

| Layers 5 to 7 | | | UDS | XCP | SOME/ IP | DDS | DHCP | |
|---|---|---|---|---|---|---|---|---|
| Layer 4 | IEEE 1722 | IEEE 802.1 AS gPTP | TCP | | UDP | | ICMP | ARP |
| Layer 3 | | | IPv4 | | | | | |
| Layer 2 | Data link layer | | | | | | | |
| Layer 1 | Physical layer | | | | | | | |

FIG. 3

Domain controller (400)

DCU (410)

| SoC | SoC | SoC | ... |

| ECU (420) | ECU (420) | ECU (420) | ECU (420) |

FIG. 4

Person A
Resource allocation
or adjustment
indication

Resource allocation
simulation device

Result feedback

Controller

Phase 4: resource
allocation

Phase 3:
deployment
optimization

Phase 1: deployment
simulation

Phase 2: running simulation

(a)

| Phase 1: deployment simulation |
|---|
| (determine a topology relationship between a plurality of service applications for which a plurality of processors in a controller are responsible, a communication protocol that the plurality of service applications comply with, a deployment strategy of the plurality of service applications, and the like) |

↓

| Phase 2: running simulation |
|---|
| (determine a current deployment status of the plurality of processors in the controller) |

↓

| Phase 3: deployment optimization |
|---|
| (adjust a resource configuration strategy and/or a neural network configuration of the controller, to obtain a better resource allocation solution) |

↓

| Phase 4: resource allocation |
|---|
| (allocate or adjust resources of the plurality of processors in the controller for the plurality of service applications) |

(b)

FIG. 5

```
┌─────────┐              ┌─────────┐              ┌─────────┐
│  APP 1  │ ── i1 ──▶    │  APP 2  │ ── i2 ──▶    │  APP 3  │
└─────────┘              └─────────┘              └─────────┘
     ▲                        ▲                        ▲
      \         i3           i4           i5          /
       \                      │                      /
        \                 ┌─────────┐               /
         ──────────────── │  APP 4  │ ─────────────
                          └─────────┘
```

FIG. 6

First interface

┌────────────────────────────────────────────────────────────┐
│   Resource allocation or adjustment                        │
│                                                            │
│ ● Input                                                    │
│        Resource configuration information    Select >      │
│        Acceleration operator                 Select >      │
│                                                            │
│                                                            │
│ ● Output                                                   │
│        Resource configuration table          Export >      │
│                                              Configure >    │
│                                                            │
└────────────────────────────────────────────────────────────┘

FIG. 7

Deployment optimization

Optimization based on an adaptive recommendation algorithm

Optimization based on historical experience

Manual optimization

Adjust a neural network configuration based on an acceleration result
- Neural network operator adjustment
- Adjustment of a processing unit deployed in a neural network
- Neural network type adjustment

Adjust a resource configuration strategy based on an acceleration result
- Deployment strategy adjustment
- Communication protocol adjustment
- Topology relationship adjustment

Resource allocation optimization
- Bandwidth resource deployment adjustment
- Memory resource deployment adjustment
- Computing resource deployment adjustment

Deployment adjustment based on an application scenario
Deployment adjustment based on a controller product function
Deployment adjustment based on a processing unit function

Resource allocation optimization
- Bandwidth resource deployment adjustment
- Memory resource deployment adjustment
- Computing resource deployment adjustment

Neural network configuration optimization
- Neural network operator adjustment
- Adjustment of a processing unit deployed in a neural network
- Neural network type adjustment

Resource configuration strategy optimization
- Deployment strategy adjustment
- Communication protocol adjustment
- Topology relationship adjustment

FIG. 8

30

S901

A first apparatus obtains a first resource allocation result and a first neural network configuration of a controller (the first resource allocation result indicates a resource allocation status of resources of a plurality of processors among a plurality of service applications when the plurality of processors of the controller run the plurality of service applications, and the first neural network configuration indicates a neural network configuration status when the plurality of processors of the controller run the plurality of service applications)

S902

When the first resource allocation result does not meet a preset condition, the first apparatus simulates running, based on an obtained acceleration operator in N different scenarios, running files corresponding to the plurality of service applications, to obtain N corresponding acceleration results (each acceleration result represents duration and a resource required for running the acceleration operator in a corresponding scenario)

S903

The first apparatus adjusts, based on the obtained N acceleration results, a first resource configuration strategy and/or the first neural network configuration of the controller, to obtain an adjustment result (the adjustment result includes a second resource configuration strategy and/or a second neural network configuration)

S904

The first apparatus allocates, based on the adjustment result, the resources of the plurality of processors to the plurality of service applications

FIG. 9

## INTERNATIONAL SEARCH REPORT

| | International application No. |
|---|---|
| | **PCT/CN2024/073486** |

**A.    CLASSIFICATION OF SUBJECT MATTER**

G06F 9/50(2006.01)i

According to International Patent Classification (IPC) or to both national classification and IPC

**B.    FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 资源, 分配, 调度, 配置, 策略, 调整, 优化, 调优, 模拟, 仿真, 车载, 汽车, 车辆, 域控制器, 神经网络, 处理器, 内存, 负载, 带宽, 加速算子, resource, allocation, scheduling, strategy, adjust, optimize, simulate, vehicle, car, domain control unit, DCU, neural network, processor, CPU, MPU, GPU, NPU, TPU, DPU, ECU, memory, load, bandwidth, acceleration operator, AUTOSAR, MDC, QoS

**C.    DOCUMENTS CONSIDERED TO BE RELEVANT**

| Category* | Citation of document, with indication, where appropriate, of the relevant passages | Relevant to claim No. |
|---|---|---|
| A | CN 114980324 A (THE 7TH RESEARCH INSTITUTE OF CHINA ELECTRONICS TECHNOLOGY GROUP CORP.) 30 August 2022 (2022-08-30) description, paragraphs 0046-0079 | 1-21 |
| A | CN 108594819 A (JINAN INSPUR HI-TECH INVESTMENT AND DEVELOPMENT CO., LTD.) 28 September 2018 (2018-09-28) entire document | 1-21 |
| A | CN 115470000 A (HUAWEI TECHNOLOGIES CO., LTD.) 13 December 2022 (2022-12-13) entire document | 1-21 |
| A | CN 114327829 A (NORTHEASTERN UNIVERSITY et al.) 12 April 2022 (2022-04-12) entire document | 1-21 |
| A | CN 114564179 A (HUAWEI TECHNOLOGIES CO., LTD.) 31 May 2022 (2022-05-31) entire document | 1-21 |
| A | US 2021132977 A1 (KABUSHIKI KAISHA TOSHIBA) 06 May 2021 (2021-05-06) entire document | 1-21 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 March 2024** | **27 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/073486**

| Patent document cited in search report | | | Publication date (day/month/year) | Patent family member(s) | | | Publication date (day/month/year) |
|---|---|---|---|---|---|---|---|
| CN | 114980324 | A | 30 August 2022 | None | | | |
| CN | 108594819 | A | 28 September 2018 | None | | | |
| CN | 115470000 | A | 13 December 2022 | None | | | |
| CN | 114327829 | A | 12 April 2022 | None | | | |
| CN | 114564179 | A | 31 May 2022 | WO | 2022110970 | A1 | 02 June 2022 |
| | | | | EP | 4235402 | A1 | 30 August 2023 |
| | | | | US | 2023297395 | A1 | 21 September 2023 |
| | | | | JP | 2023551005 | W | 06 December 2023 |
| US | 2021132977 | A1 | 06 May 2021 | US | 11635982 | B2 | 25 April 2023 |
| | | | | JP | 2021071872 | A | 06 May 2021 |
| | | | | JP | 7134937 | B2 | 12 September 2022 |

Form PCT/ISA/210 (patent family annex) (July 2022)

# EP 4 708 047 A1

**REFERENCES CITED IN THE DESCRIPTION**

**Patent documents cited in the description**

- CN 202310569681